# EUROPEAN PATENT SPECIFICATION

(11) **EP 4 314 172 B1**
(45) Date of publication and mention of the grant of the patent: **18.11.2026**
(21) Application number: 22718963.6
(22) Date of filing: 29.03.2022
(51) Int. Cl.: C09D 11/101, C09D 11/30, C09D 5/00

(54) **CATIONIC UV-LED RADIATION CURABLE PROTECTIVE VARNISHES FOR SECURITY DOCUMENTS**
KATIONISCHE UV-LED-STRAHLUNGSHÄRTBARE SCHUTZLACKE FÜR SICHERHEITSDOKUMENTE
VERNIS PROTECTEURS CATIONIQUES DURCISSABLES PAR RAYONNEMENT UV-DEL POUR DOCUMENTS DE SÉCURITÉ

(30) Priority: 01.04.2021 EP 21166712
(43) Date of publication of application: 07.02.2024
(73) Proprietor: SICPA HOLDING SA, 1008 Prilly (CH)
(72) Inventor: GARNIER, Jean, 1082 Corcelles-le-Jorat (CH); VEYA, Patrick, 1123 Aclens (CH); HOFSTETTER, Pierre-Yves, 1040 Villars-le-Terroir (CH)
(74) Representative: GatesIP
(86) International application number: PCT/EP2022/058310
(87) International publication number: WO 2022/207658

(56) References cited:
- EP-A1- 2 065 444
- WO-A1-2007/017644
- WO-A1-2019/032425
- US-A1- 2015 259 565
- CHO J D ET AL: "Photo-curing kinetics for the UV-initiated cationic polymerization of a cycloaliphatic diepoxide system photosensitized by thioxanthone", EUROPEAN POLYMER JOURNAL, PERGAMON PRESS LTD OXFORD, GB, vol. 41, no. 2, 1 February 2005 (2005-02-01), pages 367 - 374, XP027696114, ISSN: 0014-3057, [retrieved on 20050201]

## Description

### FIELD OF THE INVENTION

The present invention relates to the technical field of varnishes for protecting security documents, such as banknotes, against premature detrimental influence of soil and/or moisture upon use and time.

### BACKGROUND OF THE INVENTION

With the constantly improving quality of color photocopies and printings and in an attempt to protect security documents such as banknotes, value documents or cards, transportation tickets or cards, tax banderols, and product labels against counterfeiting, falsifying or illegal reproduction, it has been the conventional practice to incorporate various security features in these documents. Typical examples of security features include security threads, windows, fibers, planchettes, foils, patches, decals, holograms, watermarks, security features obtained from security inks comprising security materials such as magnetic pigments, UV absorbing pigments, IR absorbing pigments, optically variable pigments, light polarizing pigments, luminescent pigments, conductive pigments and surface-enhanced Raman spectroscopy particles.

It is known to provide security documents, in particular banknotes, with dirt-repellent protective coatings to extend their life and fitness for circulation. Protective coatings are protective layers facing the environment of the document, which are obtained from thermally (solvent-containing) curable varnishes, radiation-curable varnishes, or combinations thereof.

European patent application publication number EP0256170A1 proposes a protective layer consisting essentially of cellulose ester or cellulose ether for coating a currency paper printed with an ink containing 1-10% by weight of micronized wax. The protective layer is obtained by applying on the surface of the currency paper a solvent-containing varnish by spraying, dipping or roller coating, and curing said varnish with a current of hot air.

The increasing sensitivity of the public to environmental concerns, as well as the necessary responsiveness of the chemical industry to environmental regulations, have motivated the industry to develop radiation curable protective varnishes (i.e. varnishes that are cured either by UV-visible light radiation, or by electron beam radiation) that contain no or a significantly reduced amount of organic solvent (volatile organic components, VOC). Besides being more environmentally friendly than the solvent-containing protective varnishes, the radiation curable protective varnishes enable the manufacture of protective coatings having increased chemical and physical resistance and are expediently cured, thereby decreasing the manufacturing time of the security documents coated with a radiation curable protective varnish.

For example, US patent application publication number US20070017647A1 describes a dirt-repellent protective layer for extending the life time and fitness for circulation of security documents, wherein said dirt-repellent protective layer comprises at least two lacquer layers, a first lower lacquer layer being formed by a physically drying lacquer layer applied directly on the paper substrate serving for closing the paper substrate pores, and a second upper lacquer layer, which protects the substrate from physical and chemical influences. US20070017647A1 specifies that in order to provide the second upper lacquer layer with high chemical and physical resistance a UV radiation curing lacquer, such as a radically crosslinking or a cationically crosslinking curing lacquer, is used. No specific examples of radically crosslinking or cationically crosslinking UV radiation curing lacquer are disclosed.

Free-radically UV radiation curable coatings, which are cured by free radical mechanisms consisting of the activation of one or more free radical photoinitiators able to liberate free radicals upon the action of radiation, in particular of UV light, which in turn initiate the polymerization so as to form a cured layer, suffer from insufficient adhesion properties, a limited physical resistance and undesirably high levels of shrinkage during curing. Cationic UV radiation curable coatings, which are cured by cationic mechanisms consisting of the activation by UV-Vis light of one or more cationic photoinitiators, which liberate cationic species, such as acids, which in turn initiate the polymerization of the monomer so as to form a cured binder, exhibit increased adhesion and mechanical resistance when compared to free-radically UV radiation curable coatings.

The use of a cationic UV-Vis radiation curable protective varnish comprising cationically curable compounds and fluorinated compounds for imparting soil resistance to a security document has been disclosed by the international patent application publication number WO2014067715A1. The cationic UV-Vis radiation curable protective varnish described therein is applied by screen printing or flexography printing and cured by exposure to UV light emitted by a standard mercury UV-lamp.

Mercury lamps require a high amount of energy, need efficient and costly heat dissipation systems, are prone to ozone formation and have a limited lifespan. With the aim of providing solutions that are less costly, require less intervention and are more environmentally friendly, lamps and systems based on UV-LEDs have been developed for curing inks and varnishes. Contrary to medium-pressure mercury lamps that have emission bands in the UV-A, UV-B and UV-C regions of the electromagnetic spectrum, UV-LED lamps emit radiation in the UV-A region. Moreover, current UV-LED lamps emit quasi monochromatic radiation, i.e. only emit at one wavelength, such as 365 nm, 385 nm, 395 nm or 405 nm.

UV-curing efficiency of a varnish or ink layer depends *inter alia* on the overlap of the emission spectrum of the irradiation source used for said curing and the absorption spectrum of the photoinitiator comprised in said varnish or ink. Accordingly, curing of cationic UV radiation curable coating or ink layers comprising conventionally used cationic photoinitiators with UV-LED lamps suffers from a reduced curing efficiency as a result of the poor overlap of the emission spectrum of the UV-LED lamp with the absorption of the conventionally used photoinitiators, thus leading to slow or poor curing or curing defects.

Cationic UV-LED radiation curable compositions have been described in the literature. Said cationic UV-LED radiation curable compositions contain a cationic photoinitiator in combination with a photosensitizer, which absorbs the energy of the light emitted by the UV-LED lamp and acts as donor by transferring the energy to the cationic photoinitiator. International patent application publication number. WO2006093680A1 discloses a hot-melt cationic formulation curable by UV-LED exposure. The cationic formulation contains a mixture of cationically curable monomers, propylene carbonate, 2.5 wt-% of a thioxanthenium salt photoinintiator and 2 wt-% of isopropyl thioxanthone (ITX) photosensitizer. International patent application publication number WO2007017644A1 describes a cationic inkjet ink curable by exposure to a UV-LED source emitting at 395 nm. The exemplified cationic inkjet inks comprise 36.25 wt-% of epoxy UVR-6105, 33.5 wt-% of di-oxetane, 11.25 wt-% propylene carbonate, 3 wt-% of di-tolyl iodonium hexafluorophosphate as a photoinitiator, and 1 wt-% of a sensitizer, such as isopropyl-thioxanthone (ITX), 1-chloro-4-propoxy-9*H*-thioxanthen-9-one (CPTX) and di(butoxy)anthracene (DBA). WO2007017644A1 teaches that the UV-LED radiation dose required to cure the ink may be significantly decreased by doubling the amounts of photoinitiator and sensitizer, while maintaining the ratio of 3 : 1 between the wt-% of photoinitiator and the wt-% of sensitizer. Because of the photoinitiation system used in the cationic LED-curable radiation inks known in the art, and in particular the amount of sensitizer, such as isopropyl-thioxanthone (ITX), 1-chloro-4-propoxy-9H-thioxanthen-9-one (CPTX) and di(butoxy)anthracene (DBA), required for achieving a good curing, the cationic LED-curable radiation inks known in the art exhibit high fluorescence upon excitation with UV light, in particular upon excitation with UV light having a wavelength of 254 nm or 366 nm.

It is well known that UV light excitable luminescent security features have been widely used in the field of security documents, in particular for banknotes, to confer said security documents additional covert security features, wherein the protection of said security documents against counterfeit and illegal reproduction relies upon the concept that such features typically require specialized equipment and knowledge for their detection. UV light excitable luminescent security features include for example UV light excitable luminescent fibers, UV light excitable luminescent threads, UV light excitable luminescent patches, stripes or foils (wherein at least a part of said patches, stripes or foils shows luminescence upon excitation with UV light) and printed UV light excitable luminescent features. Said printed UV light excitable luminescent features include luminescent numbering (printed by letterpress), printed patches (printed by letterset), as well as luminescent features printed by offset. As security documents generally contain UV light excitable luminescent security features, which are covered by a protective coating obtained from a protective varnish, the photoinitiation systems known in the art are not acceptable for being used in protective varnishes for security documents because upon excitation with UV light having a wavelength such as 254 nm or 366 nm, the high levels of fluorescence exhibited by the protective coating impair the machine detection and/or human recognition of the UV light excitable luminescent security features.

Thus, there remains a need for a cationic UV-LED radiation curable protective varnish for providing at high speed (i.e. industrial speed) a protective coating for security documents, which extends their life and fitness for circulation, wherein said cationic UV-LED radiation curable varnish exhibits optimal curing properties and, after being cured, low fluorescence in response to 254 nm excitation and 366 nm excitation that does not impair the machine detection and/or human recognition of luminescent security features excitable by UV light, in particular with UV light having a wavelength such as 254 nm or 366 nm, contained by the coated security documents.

### SUMMARY OF THE INVENTION

Accordingly, it is the object of the present invention to provide a cationic UV-LED radiation curable protective varnish for coating at high speed (i.e. industrial speed) security documents in order to extend their life and fitness for circulation, wherein said cationic UV-LED radiation curable varnish exhibits optimal curing properties, and after being cured low fluorescence in response to excitation by UV light, such as 366 nm excitation and 254 nm excitation. This is achieved by the cationic UV-LED radiation curable protective varnish claimed herein, wherein said protective varnish comprises:
**a)** from about 65 wt-% to about 90 wt-% of either a cycloaliphatic epoxide, or a mixture of a cycloaliphatic epoxide and one or more cationically curable monomers other than the cycloaliphatic epoxide;
**b)** from about 1 wt-% to about 10 wt-%, preferably from about 2 wt-% to about 5 wt-%, more preferably about 3 wt-% of a diaryl iodonium salt;
**c)** from about 0.01 wt-% to about 5 wt-% of a non-ionic surfactant; and
**d)** a photosensitizer of general formula (I) 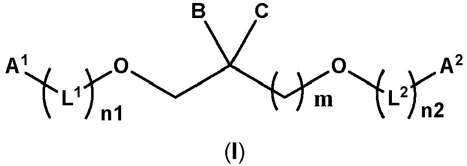 wherein in the general formula (I)
   **A¹** and **A²** are independently of each other selected from hydrogen and a moiety of the following structure: 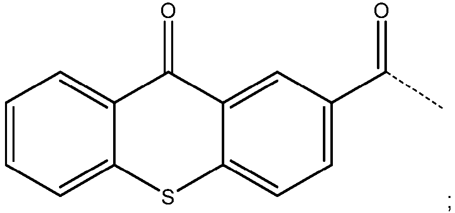
   **-L¹-** is selected from 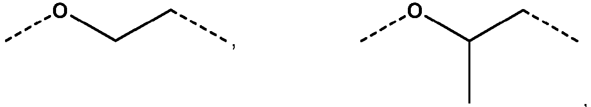 and 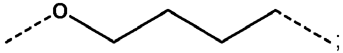
   **-L²-** is selected from 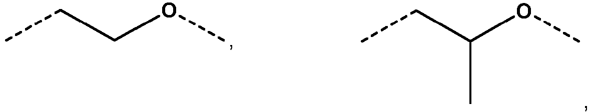 and 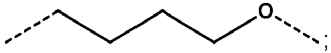
   **n1** and **n2** are integers higher than or equal to 0;
   and
   either
   **m** represents 0;
   **B** represent hydrogen;
   **C** is selected from hydrogen, 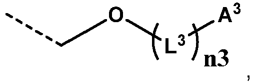 and 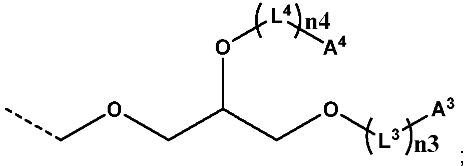
   **A³** and **A⁴** are independently of each other selected from hydrogen and a moiety of the following structure: 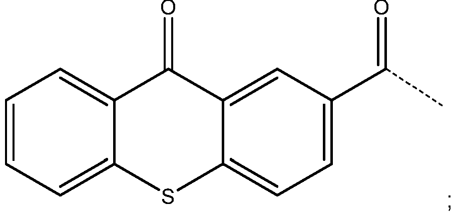
   **-L³-** and **-L⁴-** are independently of each other selected from 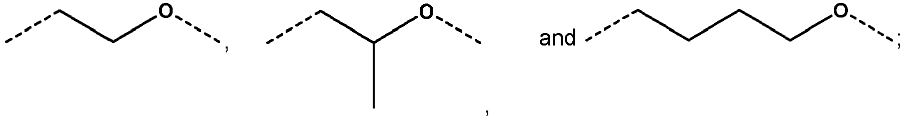
   and **n3,** and **n4** are integers higher than or equal to 0, wherein
   the sum n1+n2 is comprised between 2 and 8;
   the sum n1+n2+n3 is comprised between 3 and 12; and
   the sum n1+n2+n3+n4 is comprised between 4 and 16;
   or
   **m** represents 1;
   **B** is selected from ethyl, and 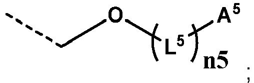
   **C** is selected from 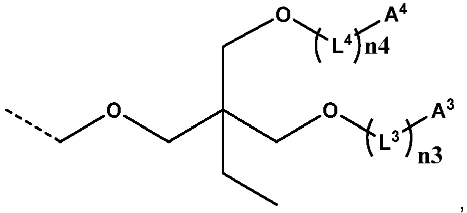 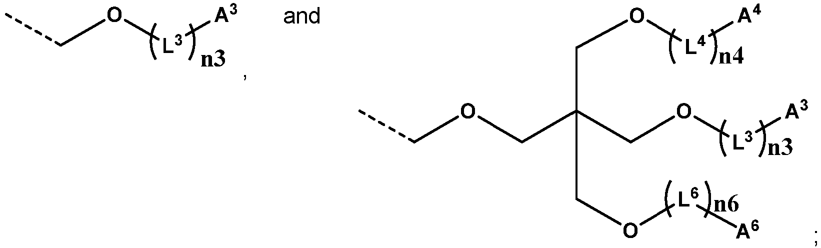
   **A³, A⁴, A⁵** and **A⁶** are independently of each other selected from hydrogen and a moiety of the following structure: 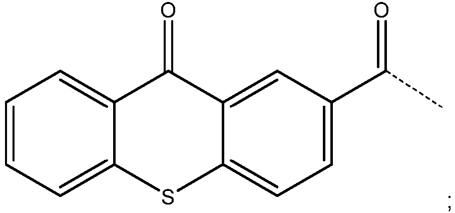
   **-L³-, -L⁴-, -L⁵-** and **-L⁶-** are independently of each other selected from 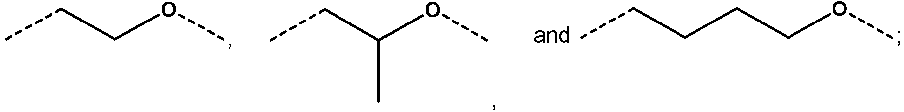
   and **n3, n4, n5** and **n6** are integers higher than or equal to 0, wherein
   the sum n1+n2+n3 is comprised between 3 and 12;
   the sum n1+n2+n3+n4 is comprised between 4 and 16;
   the sum n1+n2+n3+n4+n6 is comprised between 5 and 15;
   the sum n1+n2+n3+n5 is comprised between 4 and 16;
   the sum n1+n2+n3+n4+n5 is comprised between 5 and 15;
   the sum n1+n2+n3+n4+n5+n6 is comprised between 6 and 18;
   wherein
   the cationic UV-LED radiation curable protective varnish comprises a concentration of the moiety 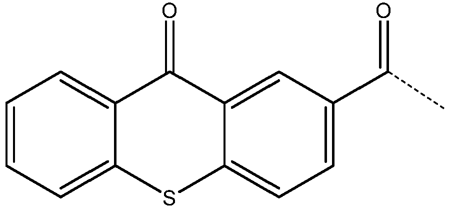
   (2-keto-thioxanthone) present in the photosensitizer of general formula (I) from about 1.3 mmol to about 4.7 mmol, preferably from about 1.45 mmol to about 4.5 mmol, more preferably from about 1.6 mmol to about 4.25 mmol, of said moiety per 100 g of cationic UV-LED radiation curable protective varnish;
   the weight percents (wt-%) being based on the total weight of the cationic UV-LED radiation curable protective varnish.

Preferably, the photosensitizer contained by the cationic UV-LED radiation curable protective varnish according to the present invention is a compound of general formula (I-b) 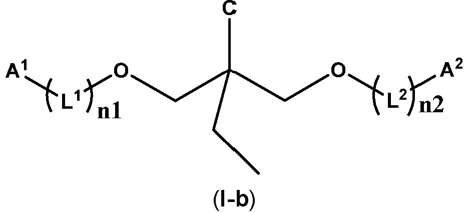 wherein
**A¹, A²**, **C, n1, n2, -L¹-** and **-L²-** have the meanings defined herein. More preferably, the photosensitizer contained by the cationic UV-LED radiation curable protective varnish according to the present invention is a compound of general formula **(I-b),** wherein **C** represents 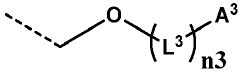
with **A³, n3** and **-L³-** having the meanings described herein.

The cationic UV-LED radiation curable protective varnish claimed and described herein is curable by exposure to UV light, preferably by exposure to one or more wavelengths of between about 365 nm and about 405 nm, more preferably by exposure to UV light at 365 nm and/or 385 nm and/or 395 nm, emitted by a UV-LED light source. Hence, another aspect according to the present invention is directed to a process for coating a security document comprising a substrate and one or more security features applied on or inserted into a portion of the substrate, wherein said process comprises the following steps:
**i)** applying, preferably by a printing method selected from flexography printing, inkjet printing, and screen printing, the cationic UV-LED radiation curable protective varnish claimed and described herein on a surface of the substrate and/or a surface of the one or more security features of the security document so as to form a varnish layer; and
**ii)** curing the varnish layer by exposure to UV light emitted by a UV-LED source so as to form a protective coating covering the surface of the substrate and/or the surface of the one or more security features of the security document. The coating process according to the present invention is environmentally friendly and enables the manufacture in an expedient manner (i.e. industrial speed) of dirt-repellent protective coatings for security documents that show acceptable levels of fluorescence in response to excitation by UV light, such as 366 nm excitation and 254 nm excitation.

A further aspect according to the present invention is directed to a security document comprising a substrate, one or more security features applied on or inserted into a portion of the substrate, and a protective coating covering a surface of the substrate and/or a surface of the one or more security features of the security document, wherein the protective coating is obtained by the coating process claimed and described herein.

### DETAILED DESCRIPTION

### Definitions

The following definitions are to be used to interpret the meaning of the terms discussed in the description and recited in the claims.

As used herein, the article "a/an" indicates one as well as more than one and does not necessarily limit its referent noun to the singular.

As used herein, the term "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, i.e. the range from 95 to 105. Preferably, the range denoted by the term "about" denotes a range within ± 3% of the value, more preferably ± 1 %. Generally, when the term "about" is used, it can be expected that similar results or effects according to the invention can be obtained within a range of ±5% of the indicated value.

As used herein, the term "and/or" means that either all or only one of the elements of said group may be present. For example, "A and/or B" means "only A, or only B, or both A and B".

In the case of "only A", the term also covers the possibility that B is absent, i.e. "only A, but not B".

The term "comprising" as used herein is intended to be non-exclusive and open-ended. Thus, for instance a solution comprising a compound A may include other compounds besides A. However, the term "comprising" also covers, as a particular embodiment thereof, the more restrictive meanings of "consisting essentially of" and "consisting of", so that for instance "a solution comprising A, B, and optionally C" may also (essentially) consist of A, and B, or (essentially) consist of A, B, and C.

Where the present description refers to "preferred" embodiments/features, combinations of these "preferred" embodiments/features are also deemed to be disclosed as long as the specific combination of "preferred" embodiments/features is technically meaningful.

As used herein, the term "one or more" means one, two, three, four, etc.

The terms "UV-LED radiation curable", "UV-LED radiation curing", "UV-LED curable" and "UV-LED curing" refer to radiation-curing by photo-polymerization under the influence of one or more radiations having a wavelength comprised between about 365 nm and about 405 nm, such as 365 nm and/or 385 nm and/or 395 nm emitted by one or more UV-LED sources.

The term "cationic UV-LED radiation curable varnish" denotes a varnish, which is cured by cationic mechanisms activated by one or more radiations having a wavelength comprised between about 365 nm and about 405 nm, such as 365 nm and/or 385 nm and/or 395 nm emitted by one or more UV-LED sources.

As used herein, a "2-keto-thioxanthone moiety" or a" 2-keto-9*H*-thioxanthen-9-one" refers to a moiety having the following structure:

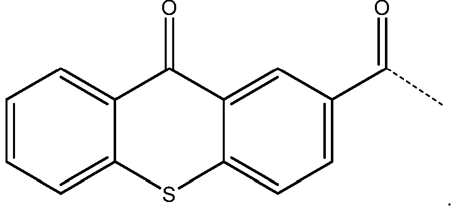

Surprisingly, it has been found that a cationic UV-LED radiation curable protective varnish comprising:
**a)** from about 65 wt-% to about 90 wt-% of either a cycloaliphatic epoxide, or a mixture of a cycloaliphatic epoxide and one or more cationically curable monomers other than the cycloaliphatic epoxide;
**b)** from about 1 wt-% to about 10 wt-%, preferably from about 2 wt-% to about 5 wt-%, more preferably about 3 wt-% of a diaryl iodonium salt;
**c)** from about 0.01 wt-% to about 5 wt-% of a non-ionic surfactant; and
**d)** a photosensitizer of general formula (**I**) 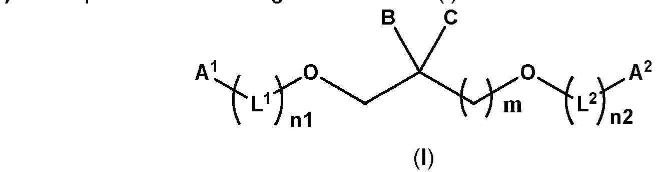 wherein in the general formula (I)
   **A¹** and **A²** are independently of each other selected from hydrogen and a moiety of the following structure: 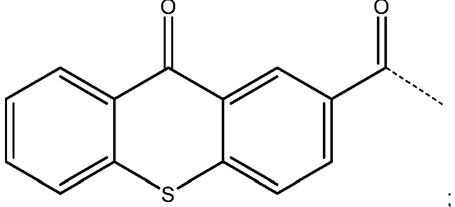
   **-L¹-** is selected from 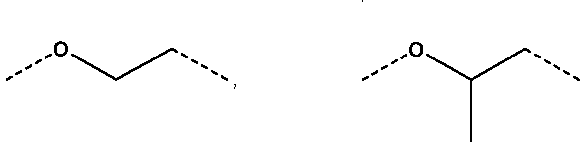 and 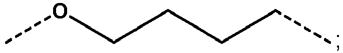
   **-L²-** is selected from 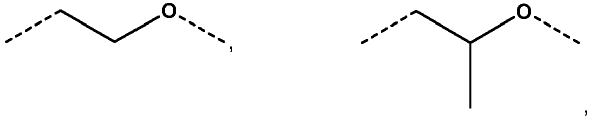 and 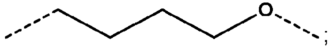
   **n1** and **n2** are integers higher than or equal to 0;
   and
   either
   **m** represents 0;
   **B** represent hydrogen;
   **C** is selected from hydrogen, 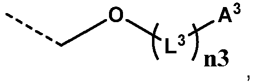 and 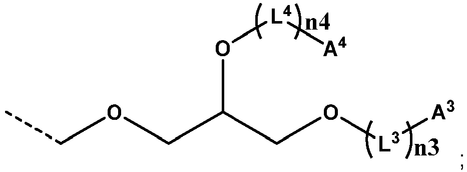
   **A³** and **A⁴** are independently of each other selected from hydrogen and a moiety of the following structure: 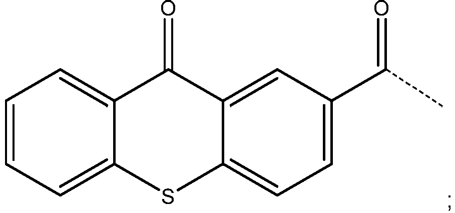
   **-L³-** and **-L⁴-** are independently of each other selected from 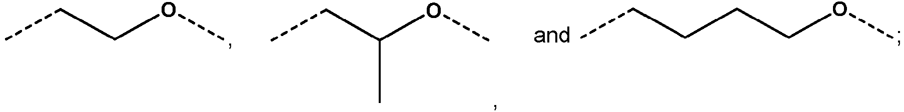
   and **n3,** and **n4** are integers higher than or equal to 0, wherein
   the sum n1+n2 is comprised between 2 and 8;
   the sum n1+n2+n3 is comprised between 3 and 12; and
   the sum n1+n2+n3+n4 is comprised between 4 and 16;
   or
   **m** represents 1;
   **B** is selected from ethyl, and 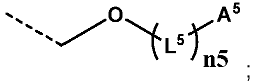
   **C** is selected from 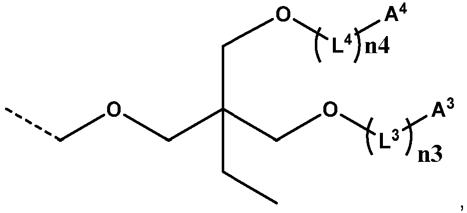 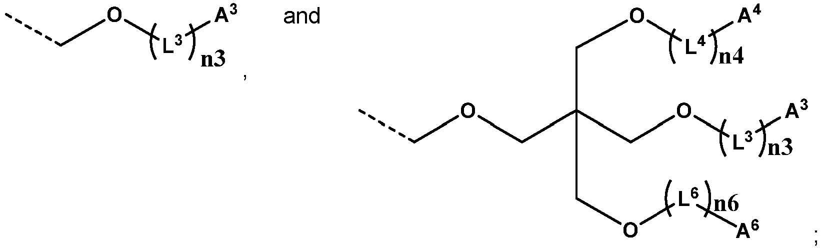
   **A³, A⁴, A⁵** and **A⁶** are independently of each other selected from hydrogen and a moiety of the following structure: 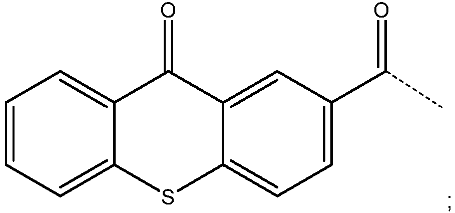
   **-L³-, -L⁴-, -L⁵-** and **-L⁶-** are independently of each other selected from 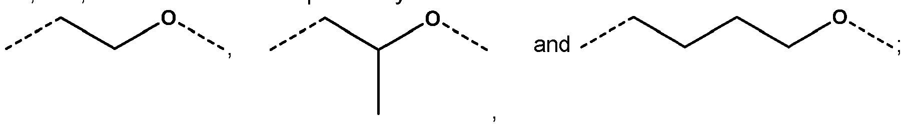
   and **n3, n4, n5** and **n6** are integers higher than or equal to 0, wherein
   the sum n1+n2+n3 is comprised between 3 and 12;
   the sum n1+n2+n3+n4 is comprised between 4 and 16;
   the sum n1+n2+n3+n4+n6 is comprised between 5 and 15;
   the sum n1+n2+n3+n5 is comprised between 4 and 16;
   the sum n1+n2+n3+n4+n5 is comprised between 5 and 15;
   the sum n1+n2+n3+n4+n5+n6 is comprised between 6 and 18;
   wherein
   the cationic UV-LED radiation curable protective varnish comprises a concentration of the moiety (2-keto-thioxanthone) present in the 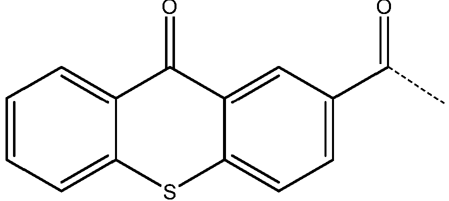
   photosensitizer of general formula (I) from about 1.3 mmol to about 4.7 mmol, preferably from about 1.45 mmol to about 4.5 mmol, more preferably from about 1.6 mmol to about 4.25 mmol, of said moiety per 100 g of cationic UV-LED radiation curable protective varnish, the weight percents being based on the total weight of the cationic UV-LED radiation curable protective varnish, exhibits optimal curing properties, and following curing, shows levels of fluorescence in response to excitation by UV light, such as 366 nm excitation and 254 nm excitation, that are acceptable in the field of security documents. The use of a photoinitiation system containing a diaryl iodonium salt as a cationic photoinitiator and a photosensitizer of general formula **(I)** containing one or more 2-keto-thioxanthone moieties, wherein the concentration of 2-keto-thioxanthone moiety present in the photosensitizer of general formula **(I)** in the cationic UV-LED curable protective varnish is of between about 1.3 mmol and about 4.7 mmol, preferably from about 1.45 mmol to about 4.5 mmol, more preferably from about 1.6 mmol to about 4.25 mmol, of said 2-keto-thioxanthone moiety per 100 g of cationic UV-LED curable protective varnish, ensures that the cationic UV-LED curable protective varnish exhibits optimal curing properties and provides protective coatings with levels of fluorescence in response to excitation by UV light, such as 366 nm excitation and 254 nm excitation, acceptable for the field of security documents.

The cationic UV-LED radiation curable protective varnish claimed and described herein comprises
**d)** a photosensitizer of general formula **(I)** 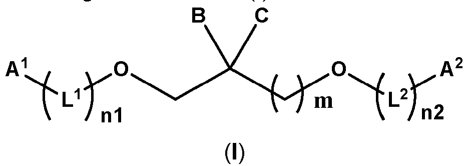 wherein in the general formula **(I)**
**A¹** and **A²** are independently of each other selected from hydrogen and a moiety of the following structure: 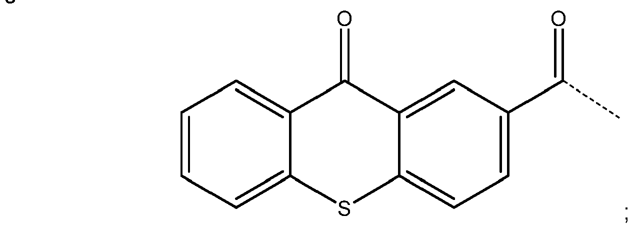
**-L¹-** is selected from 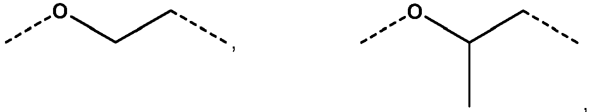 and 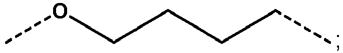
**-L²-** is selected from 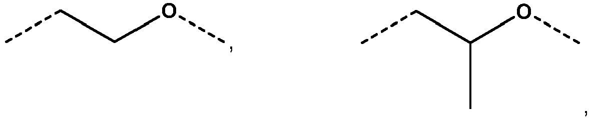 and 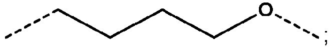
**n1** and **n2** are integers higher than or equal to 0;
and
either
**m** represents 0;
**B** represent hydrogen;
**C** is selected from hydrogen, 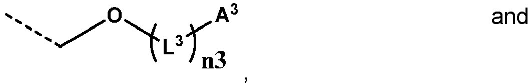 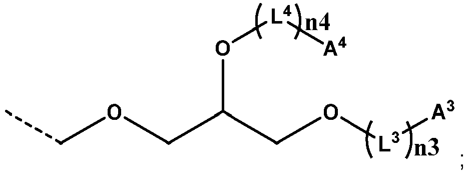
**A³** and **A⁴** are independently of each other selected from hydrogen and a moiety of the following structure: 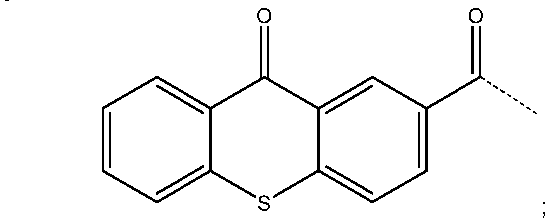
**-L³-** and **-L⁴-** are independently of each other selected from 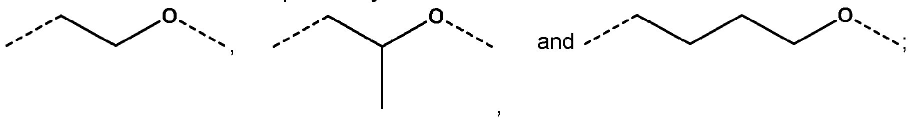
and **n3,** and **n4** are integers higher than or equal to 0, wherein
the sum n1+n2 is comprised between 2 and 8;
the sum n1+n2+n3 is comprised between 3 and 12; and
the sum n1+n2+n3+n4 is comprised between 4 and 16;
or
**m** represents 1;
**B** is selected from ethyl, and 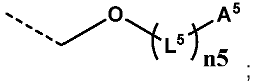
**C** is selected from 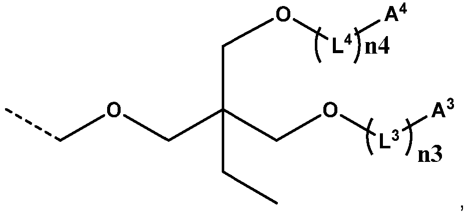 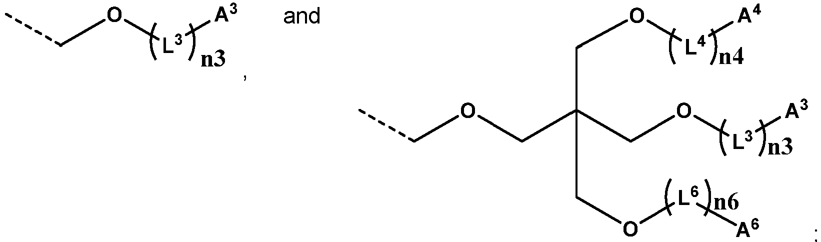
**A³, A⁴, A⁵** and **A⁶** are independently of each other selected from hydrogen and a moiety of the following structure: 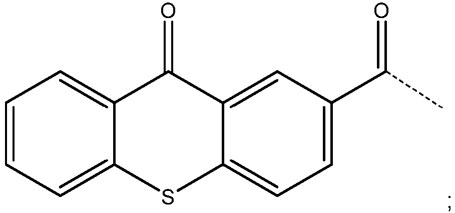
**-L³-, -L⁴-, -L⁵-** and **-L⁶-** are independently of each other selected from 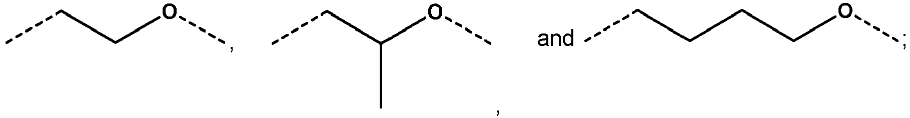
and **n3, n4, n5** and **n6** are integers higher than or equal to 0, wherein
the sum n1+n2+n3 is comprised between 3 and 12;
the sum n1+n2+n3+n4 is comprised between 4 and 16;
the sum n1+n2+n3+n4+n6 is comprised between 5 and 15;
the sum n1+n2+n3+n5 is comprised between 4 and 16;
the sum n1+n2+n3+n4+n5 is comprised between 5 and 15;
the sum n1+n2+n3+n4+n5+n6 is comprised between 6 and 18;
and a concentration of the moiety 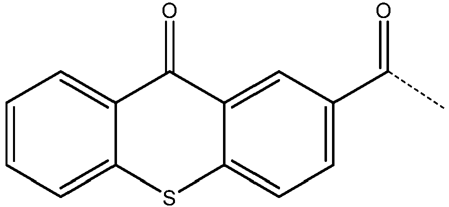 (2-keto-thioxanthone) present in the photosensitizer of general formula (I) from about 1.3 mmol to about 4.7 mmol, preferably from about 1.45 mmol to about 4.5 mmol, more preferably from about 1.6 mmol to about 4.25 mmol, of said moiety per 100 g of cationic UV-LED radiation curable protective varnish.

As the cationic UV-LED radiation curable protective varnish comprises a concentration of the 2-keto-thioxanthone moiety present in the photosensitizer from about 1.3 mmol to about 4.7 mmol, preferably from about 1.45 mmol to about 4.5 mmol, more preferably from about 1.6 mmol to about 4.25 mmol, of said moiety per 100 g of cationic UV-LED radiation curable protective varnish, the corresponding amount (wt-% based on the total weight of the cationic UV-LED radiation curable protective varnish) of photosensitizer of general formula **(I)** contained by said varnish can be easily calculated on the basis of the molar concentration of the 2-keto-thioxanthone moiety in a photosensitizer of general formula **(I)** (mmol 2-keto-thioxanthone moiety / g of photosensitizer of general formula **(I)).** The molar concentration of the 2-keto-thioxanthone moiety in a photosensitizer of general formula **(I)** (mmol 2-keto-thioxanthone moiety / g of photosensitizer) is equal to the sulfur molar concentration in said photosensitizer of general formula **(I)** (mmol sulfur / g of photosensitizer), which can be determined by Energy Dispersion X-Ray Fluorescence (ED-XRF) using the signal of the sulfur atom contained by the 2-keto-thioxanthone moiety. The ED-XRF measurement may be conducted by the internal standard addition technique with a spectrometer Spectro XEFOS by using a 9*H*-thioxanthen-9-one (thioxanthone) containing compound of a known structure, for example 2-isopropyl-9*H*-thioxanthen-9-one (ITX), as an internal standard.

In a preferred embodiment according to the present invention, **m** represents 0 and **B** represents hydrogen. Thus, a cationic UV-LED curable protective varnish containing a photosensitizer of general formula (**I-a**) 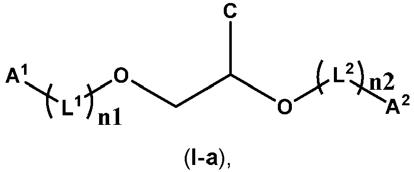 wherein **A¹, A²**, **C, n1, n2, -L¹-** and **-L²-** have the meanings defined herein, is preferred.

In an alternative preferred embodiment according to the present invention, **m** represents 1. Hence, the cationic UV-LED radiation curable protective varnish claimed and described herein may contain a photosensitizer of general formula **(I-d)** 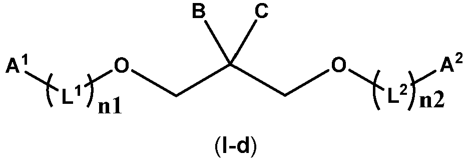 wherein **A¹, A²**, B, **C, -L¹-**, **-L²-, n1** and **n2** have the meanings defined herein.

An especially preferred embodiment according to the present invention relates to a cationic UV-LED radiation curable protective varnish as claimed and described herein, wherein **m** represents 1 and **B** represents ethyl. Hence, a cationic UV-LED radiation curable protective varnish as claimed and described herein containing a photosensitizer of general formula **(I-b)** 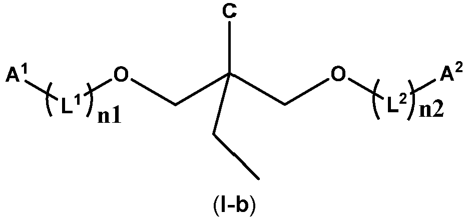 wherein **A¹, A²**, **C, n1, n2, -L¹-** and **-L²-** have the meanings defined herein, is especially preferred.

A further preferred embodiment according to the present invention relates to a cationic UV-LED radiation curable protective varnish as claimed and described herein, wherein **m** represents 1 and **B** represents 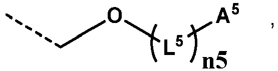 wherein **-L⁵-, n5** and **A⁵** have the meanings defined herein. Hence, a cationic UV-LED radiation curable protective varnish as claimed and described herein containing a photosensitizer of general formula **(I-c)** 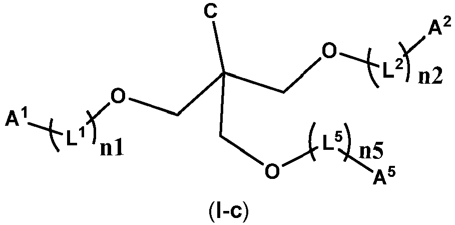 wherein **A¹, A²**, **A⁵, C, n1, n2, n5, -L¹-, -L²-** and **-L⁵-** have the meanings defined herein, is also preferred.

Preferably, **C** represents 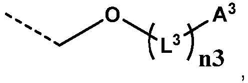 wherein **-L³-, n3** and **A³** have the meanings defined herein. Thus, a cationic UV-LED radiation curable protective varnish as claimed and described herein containing a photosensitizer of general formula **(I), (I-a), (I-b), (I-c)** or **(I-d),** wherein **C** represents 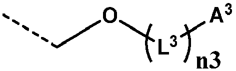 and **-L³-, n3** and **A³** have the meanings defined herein, is preferred. Especially preferred is a cationic UV-LED radiation curable protective varnish as claimed and described herein containing a photosensitizer of general formula (I-e) 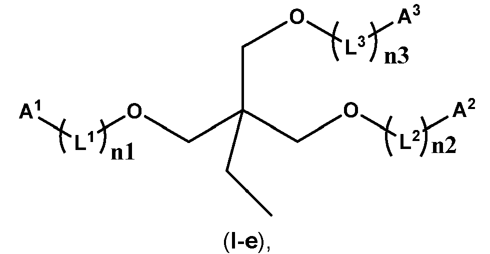 wherein **A¹, A²**, **A³, -L¹-, -L²-, -L³-, n1, n2** and **n3** have the meanings defined herein.

Preferably **-L¹-** represents 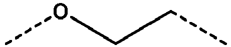 and **-L²-, -L³-, -L⁴-, -L⁵-** and **-L³-**represent 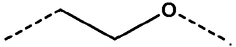 Thus, a cationic UV-LED curable protective varnish comprising a photosensitizer of general formula **(I), (I-a), (I-b), (I-c), (I-d)** or **(I-e),** wherein **-L¹-**represents 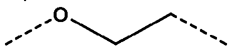 and **-L²-, -L³-, -L⁴-, -L⁵-** and **-L⁶-** represent 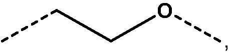 is preferred.

A particularly preferred embodiment according to the present invention is directed to a cationic UV-LED curable protective varnish comprising a photosensitizer of general formula **(I-f)** 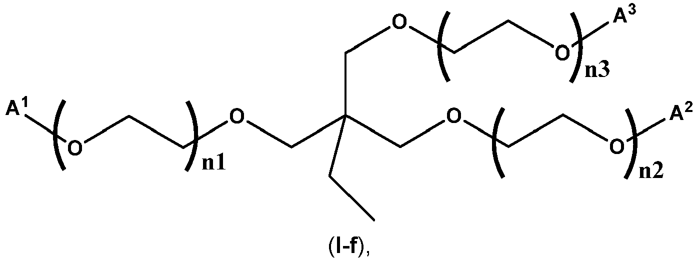 wherein **A¹, A²**, **A³, n1, n2** and **n3** have the meanings defined herein. In the general formula **(I-f),** one or more, preferably two or more of the **A¹, A²**, and **A³** represent a 2-keto-thioxanthone moiety of the following structure:

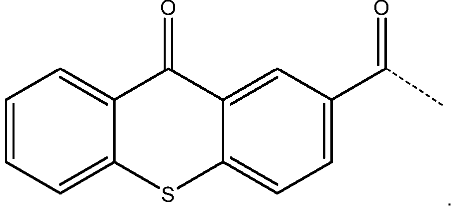

The cationic UV-LED curable protective varnish may comprise a mixture of photosensitizers of general formula **(I), (I-a), (I-b), (I-c), (I-d), (I-e)** or **(I-f),** with the proviso that the varnish contains a concentration of the 2-keto-thioxanthone moiety from about 1.3 mmol to about 4.7 mmol, preferably from about 1.45 mmol to about 4.5 mmol, more preferably from about 1.6 mmol to about 4.25 mmol, of said moiety per 100 g of cationic UV-LED radiation curable protective varnish. A particularly preferred cationic UV-LED curable protective varnish according to the present invention comprises a photosensitizer of general formula **(I-f),** wherein **A¹, A²**, and **A³** are 2-keto-thioxanthone moieties, a photosensitizer of general formula **(I-f),** wherein **A¹** and **A²** are 2-keto-thioxanthone moieties, and **A³** represents hydrogen, and a photosensitizer of general formula **(I-f),** wherein **A¹** is a 2-keto-thioxanthone moiety and **A²** and **A³** represent hydrogen, and is characterized by a concentration of the 2-keto-thioxanthone moiety from about 1.3 mmol to about 4.7 mmol, preferably from about 1.45 mmol to about 4.5 mmol, more preferably from about 1.6 mmol to about 4.25 mmol, of said moiety per 100 g of cationic UV-LED radiation curable protective varnish.

In a further preferred embodiment according to the present invention, **-L¹-** represents 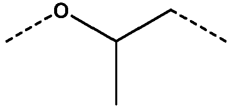 and **-L²-, -L³-, -L⁴-, -L⁵-** and **-L⁶-** represent

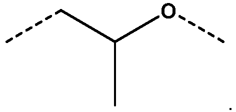

The photosensitizer of general formula **(I), (I-a), (I-b), (I-c), (I-d), (I-e),** and (**I-f**) preferably has a weight average molecular weight (M_{W}) higher than or equal to about 700 g/mol eq PS, more preferably higher than or equal to 900 g/mol eq PS, wherein said weight average molecular weight is determined by gel permeation chromatography (GPC) according to the OECD (Organisation for Economic Cooperation and Development) test method 118, wherein a Malvern Viskotek GPCmax is used and wherein a calibration curve (log(molecular mass) = f(retention volume)) is established using six polystyrene (PS) standards (with molecular masses ranging from 472 to 512000 g/mol). The device is equipped with an isocratic pump, a degasser, an autosampler and a triple detector TDA 302 comprising a differential refractometer, a viscosimeter and a double-angle light scattering detector (7° and 90°). For this specific measurement, only the differential refractometer is used. Two columns Viskotek TM4008L (column length 30.0 cm, internal diameter 8.0 mm) were coupled in series. The stationary phase was made of a styrene-divinylbenzene copolymer with a particle size of 6 µm and a maximum pore size of 3000 Å. During the measurements, the temperature was fixed at 35°C and the samples contain 10 mg/mL of the compound to be analyzed and being dissolved in THF (Acros, 99.9%, anhydrous). As described in the Examples herebelow, the samples are independently injected at a rate of 1 ml/min. The molecular mass of the compound is calculated from the chromatogram as a polystyrene-equivalent weight average molecular weight (PS eq M_{W}), with a 95% confidence level and the average of three measurements of the same solution using the following formula: ${M}_{w} = \frac{{\sum }_{i = 1}^{n} {H}_{i} {M}_{i}}{{\sum }_{i = 1}^{n} {H}_{i}}$ where *Hᵢ* is the level of the detector signal from the baseline for the retention volume *Vᵢ, Mᵢ* is the molecular weight of the polymer fraction at the retention volume *Vᵢ and n* is number of data points. Omnisec 5.12 as supplied with the device is used as a software.

Preferably, the concentration of the 2-keto-thioxanthone moiety in the cationic UV-LED curable protective varnish is from from about 1.3 mmol to about 4.7 mmol, preferably from about 1.45 mmol to about 4.5 mmol, more preferably from about 1.6 mmol to about 4.25 mmol, especially preferably from about 1.6 mmol to about 2.9 mmol, such as from about 1.63 mmol to about 2.9 mmol, 2-keto-thioxanthone moiety per 100 g cationic UV-LED curable protective varnish.

The cationic UV-LED curable protective varnish claimed and described herein comprises
**b)** from about 1 wt-% to about 10 wt-%, preferably from about 2 wt-% to about 5 wt-%, more preferably about 3 wt-% of a diaryl iodonium salt.

As used herein, the term "diaryl iodonium salt" refers to a cationic photoinitiator containing a diaryl iodonium as cationic moiety and any suitable anionic moiety including, but not limited to BF₄⁻(tetrafluoroborate, CAS Nr 14874-70-5), B(C₆F₅)₄⁻ (tetrakis(pentafluorophenyl)borate, CAS Nr 47855-94-7), PF₆⁻ (hexafluorophosphate, CAS Nr 16919-18-9), AsF₆⁻(hexafluoroarsenate, CAS Nr 16973-45-8), SbF₆⁻(hexafluoroantimonate, CAS Nr 17111-95-4), CF₃SO₃⁻ (trifluoromethanesulfonate, CAS Nr 37181-39-8), (CH₃C₆H₄)SO₃⁻ (4-methylbenzenesulfonate, CAS Nr 16722-51-3), (C₄F₉)SO₃⁻(1,1,2,2,3,3,4,4,4-nonafluoro-1-butanesulfonate, CAS Nr 45187-15-3), (CF₃)CO₂⁻(trifluoroacetate, CAS Nr 14477-72-6), (C₄F₉)CO₂⁻ (2,2,3,3,4,4,5,5,5-nonafluoro-1-pentanoate, CAS Nr 45167-47-3), and (CF₃SO₂)₃C⁻ (tris(trifluoromethylsulfonyl)methide, CAS Nr 130447-45-9).

The two aryl groups of the diaryl iodonium cationic moiety may be independently of each other substituted by one or more linear or branched alkyl groups (such as for example methyl, ethyl, isopropyl, isobutyl, tertbutyl, undecyl, dodecyl, tridecyl, tetradecyl etc.) that are optionally substituted by one or more halogens and/or one or more hydroxy groups; one or more alkyloxy groups that are optionally substituted by one or more halogens and/or one or more hydroxy groups; one or more nitro groups; one or more halogens; one or more hydroxy groups; or a combination thereof. Examples of diaryl iodonium cationic moiety as described herein include bis(4-dodecylphenyl)iodonium (CAS Nr 71786-69-1), bis[4-(1,1-dimethylethyl) phenyl]iodonium (CAS Nr 61267-44-5), (4-isopropylphenyl)(4-methylphenyl)iodonium (CAS Nr 178233-71-1), bis(4-methylphenyl)iodonium (CAS Nr 46449-56-3), (4-methylphenyl)[4-(2-methylpropyl)phenyl]iodonium (CAS Nr 344562-79-4), bis(2,4-dimethylphenyl)]iodonium (CAS Nr 78337-07-2), bis(3,4-dimethylphenyl)]iodonium (CAS Nr 66482-57-3), (4-methylphenyl)(2,4,6-trimethylphenyl)iodonium (CAS Nr 758629-51-5), bis[(4-(2-methylpropyl)phenyl]iodonium (CAS Nr 157552-66-4), bis(4-butylphenyl]iodonium (CAS Nr 76310-29-7), bis(2,4,6-trimethylphenyl)iodonium (CAS Nr 94564-97-3), bis(4-hexylylphenyl]iodonium (CAS Nr 249300-48-9), bis(4-decylphenyl)iodonium (CAS Nr 137141-44-7), (4-decylphenyl)(4-undecylphenyl)iodonium (CAS Nr 167997-83-3), bis(4-undecylphenyl)iodonium (CAS Nr 167997-61-7), bis(4-tridecylphenyl)iodonium (CAS Nr 124053-08-3), bis(4-tetradecylphenyl)iodonium (CAS Nr 167997-63-9), bis(4-hexadecylphenyl)iodonium (CAS Nr 137141-41-4), bis(4-heptadecylphenyl)iodonium (CAS Nr 144095-91-0), bis(4-octadecylphenyl)iodonium (CAS Nr 202068-75-5), (4-decylphenyl)(4-dodecylphenyl)iodonium (CAS Nr 167997-67-3), (4-decylphenyl)(4-tridecylphenyl)iodonium (CAS Nr 167997-77-5), (4-decylphenyl)(4-tetradecylphenyl)iodonium (CAS Nr 167997-81-1), (4-dodecylphenyl)(4-undecylphenyl)iodonium (CAS Nr 167997-71-9), (4-dodecylphenyl)(4-tridecylphenyl)iodonium (CAS Nr 167997-69-5), (4-dodecylphenyl)(4-tetradecylphenyl) iodonium (CAS Nr 167997-65-1), (4-tridecylphenyl)(4-undecylphenyl)iodonium (CAS Nr 167997-73-1), (4-tetradecylphenyl)(4-undecylphenyl) iodonium (CAS Nr 167997-79-7), (4-tetradecylphenyl)(4-tridecylphenyl)iodonium (CAS Nr 167997-75-3), p-(octyloxyphenyl) phenyliodonium (CAS Nr 121239-74-5), [4-[(2-hydroxytetradecyl)oxy]phenyl]phenyliodonium (CAS Nr 139301-14-7), phenyl[3-(trifluoromethyl)phenyl]iodonium (CAS Nr 789443-26-1), bis(4-fluorophenyl)iodonium (CAS Nr 91290-88-9); (4-nitrophenyl)phenyliodonium (CAS Nr 46734-23-0), and (4-nitrophenyl)(2,4,6-trimethylphenyl)iodonium (CAS Nr 1146127-10-7).

Preferably, the diaryl iodonium salt is of a compound of general formula (II) wherein 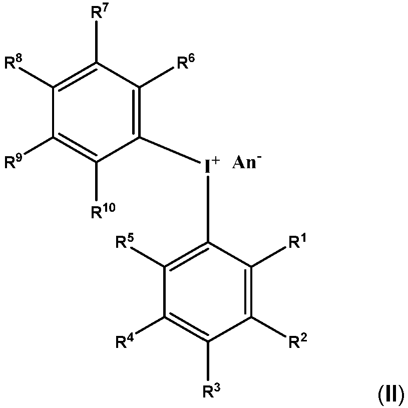
**R¹** - **R¹⁰** are independently of each other selected from hydrogen, a C₁-C₁₈-alkyl group, and C₁-C₁₂-alkyloxy group; and
**An⁻** is an anion selected from BF₄⁻, B(C₆F₅)₄⁻, PF₆⁻, AsF₆⁻, SbF₆⁻, CF₃SO₃⁻, (CH₃C₆H₄)SO₃⁻, (C₄F₉)SO₃⁻, (CF₃)CO₂⁻, (C₄F₉)CO₂⁻, and (CF₃SO₂)₃C⁻, preferably selected from BF₄⁻, B(C₆F₅)₄⁻, PF₆⁻, AsF₆⁻, SbF₆⁻, and CF₃SO₃⁻.

The term "C₁-C₁₈-alkyl group" as used herein refers to a saturated linear or branched-chain monovalent hydrocarbon radical of one to eighteen carbon atoms (C₁-C₁₈). Examples of C₁-C₁₈-alkyl groups include, but are not limited to methyl (Me, -CH₃), ethyl (Et, -CH₂CH₃), 1-propyl (*n*-Pr, *n*-propyl, -CH₂CH₂CH₃), 2-propyl (*i*-Pr, *iso*-propyl, -CH(CH₃)₂), 1-butyl (*n*-Bu, *n-*butyl, -CH₂CH₂CH₂CH₃), 2-methyl-1-propyl (*i*-Bu, *i*-butyl, -CH₂CH(CH₃)₂), 2-butyl (*s*-Bu, *s-*butyl, -CH(CH₃)CH₂CH₃), 2-methyl-2-propyl (*t*-Bu, *t*-butyl, -C(CH₃)₃), 1-pentyl (*n*-pentyl, -CH₂CH₂CH₂CH₂CH₃), 2-pentyl (-CH(CH₃)CH₂CH₂CH₃), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl (-CH₂CH(CH₃)CH₂CH₃), 1-hexyl (-CH₂CH₂CH₂CH₂CH₂CH₃), 2-hexyl (-CH(CH₃)CH₂CH₂CH₂CH₃), 3-hexyl (-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2,3-dimethyl-2-butyl (-C(CH₃)₂CH(CH₃)₂), 3,3-dimethyl-2-butyl (-CH(CH₃)C(CH₃)₃), 1-heptyl (-CH₂(CH₂)₅CH₃), 1-octyl (-CH₂(CH₂)₆CH₃), 1-nonyl (-CH₂(CH₂)₇CH₃), 1-decyl (-CH₂(CH₂)₈CH₃), 1-undecyl (-CH₂(CH₂)₉CH₃) and 2-dodecyl (-CH₂(CH₂)₁₀CH₃).

The term "C₁-C₁₂-alkyloxy" means a C₁-C₁₂-alkyl group (i.e. a saturated linear or branched-chain monovalent hydrocarbon radical of one to twelve carbon atoms (C₁-C₁₂)), which is linked to the rest of the molecule through an oxygen atom.

Preferably, in general formula **(II)** the substituents **R¹, R², R⁴, R⁵, R⁶, R⁷, R⁹** and **R¹⁰** represent hydrogen. Hence, a preferred cationic photoinitiator is a compound of general formula **(II-a)** wherein 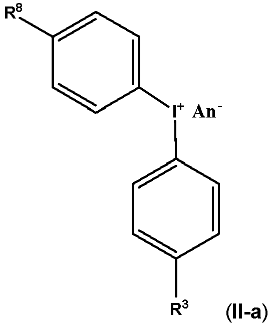
**An⁻** has the meaning defined herein; and
**R³** and **R⁸** are independently of each other selected from hydrogen, a C₁-C₁₈-alkyl group, and a C₁-C₁₂-alkyloxy group, preferably selected from hydrogen and a C₁-C₁₈-alkyl group, more preferably selected from hydrogen and a C₁-C₁₂-alkyl group, and especially preferably selected from a C₁-C₄-alkyl group.

Preferably, in general formulae **(II)** and (**II-a**), the anion **An⁻** represents PF₆⁻.

Particularly suitable diaryl iodonium salts of genera formula (II) and (**II-a**) are commercially available known under the name DEUTERON UV 1240 (CAS Nr 71786-70-4), DEUTERON UV 1242 (mixture of CAS Nr 71786-70-4 and CAS Nr 68609-97-2), DEUTERON UV 2257 (mixture of CAS Nr 60565-88-0 and CAS Nr 108-32-7), DEUTERON UV 1250 (mixture of branched bis-((C₁₀-C₁₃)alkylphenyl)-iodoniumhexafluoroantimonate and CAS Nr 68609-97-2), and DEUTERON UV 3100 (mixture of branched bis-((C₇-C₁₀)alkylphenyl)-iodonium hexafluorophosphate and CAS Nr. 68609-97-2), all available from DEUTERON, OMNICAT 250 (CAS Nr 344562-80-7), OMNICAT 440 (CAS Nr 60565-88-0), and OMNICAT 445 (mixture of CAS Nr 60565-88-0 and CAS Nr 3047-32-3), all available from IGM Resins, SpeedCure 937 (CAS Nr 71786-70-4), SpeedCure 938 (CAS Nr 61358-25-6) and SpeedCure 939 (CAS Nr 178233-72-2), all available from Lambson.

The cationic UV-LED curable protective varnish according to the present invention comprises
**a)** from about 65 wt-% to about 90 wt-%, preferably from about 70 wt-% to about 90 wt-% of either a cycloaliphatic epoxide, or a mixture of a cycloaliphatic epoxide and one or more cationically curable monomers other than the cycloaliphatic epoxide.

Preferably, the cationic UV-LED curable protective varnish claimed and described herein comprises from about 65 wt-% to about 90 wt-%, preferably from about 70 wt-% to about 90 wt-% of a mixture of a cycloaliphatic epoxide and one or more cationically curable monomers other than the cycloaliphatic epoxide. More preferably, the cationic UV-LED curable protective varnish claimed and described herein comprises from about 70 wt-% to about 90 wt-% of a mixture of a cycloaliphatic epoxide and one or more cationically curable monomers other than the cycloaliphatic epoxide, wherein the cycloaliphatic epoxide is present in an amount of at least 70 wt-%, the weight percents being based on the total weight of the cationic UV-LED radiation curable protective varnish.

As well known to the skilled person, a cycloaliphatic epoxide is a cationically curable monomer containing at least a substituted or unsubstituted epoxycyclohexyl residue:

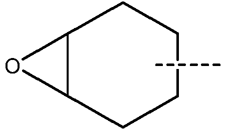

Preferably, the cycloaliphatic epoxide described herein comprises at least one cyclohexane ring, and at least two epoxide groups. More preferably, the cycloaliphatic epoxide is a compound of general formula **(III):** 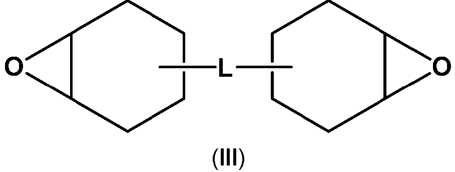 wherein **-L-** represents a single bond or a divalent group comprising one or more atoms. The cycloaliphatic epoxide of general formula **(III)** is optionally substituted by one or more linear or branched alkyl radicals containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl).

In the general formula **(III),** the divalent group **-L-** may be a straight- or branched-chain alkylene group comprising from one to eighteen carbon atoms. Examples of said straight- or branched-chain alkylene group include without limitation methylene group, methylmethylene group, dimethylmethylene group, ethylene group, propylene group, and trimethylene group.

In the general formula **(III),** the divalent group **-L-** may be a divalent alicyclic hydrocarbon group or cycloalkydene group, such as 1,2-cyclopentylene group, 1,3-cyclopentylene group, cyclopentylidene group, 1,2-cyclohexylene group, 1,3-cyclohexylene group, 1,4-cyclohexylene group, and cyclohexylidene group.

In the general formula **(III), -L-** may be a divalent group comprising one or more oxygen-containing linkage groups, wherein said oxygen-containing linkage groups are selected from the group consisting of -C(=O)-, -OC(=O)O-, -C(=O)O-, and -O-. Preferably, the cycloaliphatic epoxide is a cycloaliphatic epoxide of general formula **(III),** wherein **-L-** is a divalent group comprising one or more oxygen-containing linkage groups, wherein said oxygen-containing linkage groups are selected from the group consisting of -C(=O)-, -OC(=O)O-, -C(=O)O-, and -O-, and more preferably a cycloaliphatic epoxide of general formula **(III-a), (III-b),** or **(III-c),** as defined below: 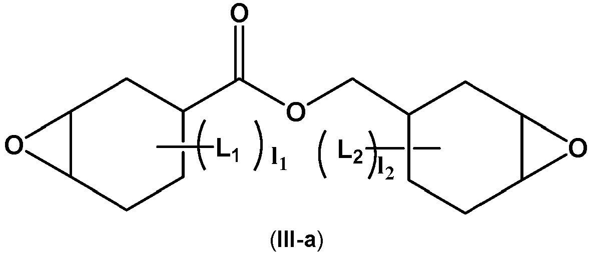 wherein
**L₁** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
**L₂** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl); and
**I₁** and **I₂** are independently of each other integers comprised between 0 and 9, preferably comprised between 0 and 3, and more preferably 0; 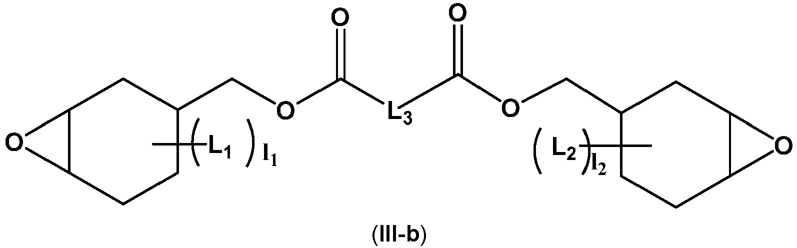
wherein
**L₁** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
**L₂** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl); and
**I₁** and **I₂** are independently of each other integers comprised between 0 and 9, preferably comprised between 0 and 3, and more preferably 0;
**-L₃-** is a single bond or a linear or branched divalent hydrocarbon group containing from one to ten carbon atoms, and preferably containing from three to eight carbon atoms, such as alkylene groups including trimethylene, tetramethylene, hexamethylene, and 2-ethylhexylene, and cycloalkylene groups such as 1,2-cyclohexylene group, 1,3-cyclohexylene group, and 1,4-cyclohexylene group, and cyclohexylidene group; 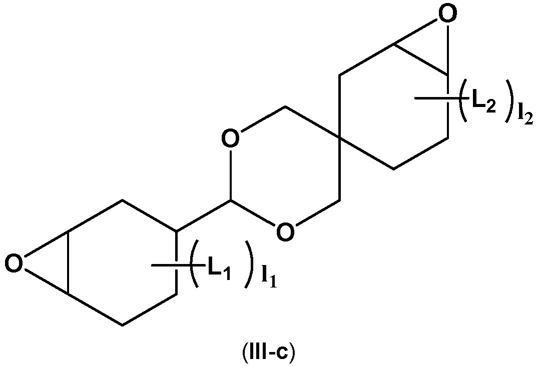
wherein
**L₁** can be the same, or different in each occurrence and is a linear or branched alkyl radical containing from one to three carbon atoms, such as methyl, ethyl, *n*-propyl, and *i*-propyl;
**L₂** can be the same, or different in each occurrence and is a linear or branched alkyl radical containing from one to three carbon atoms, such as methyl, ethyl, *n*-propyl, and *i*-propyl; and **I₁** and **I₂** are independently of each other integers comprised between 0 and 9, preferably comprised between 0 and 3, and more preferably 0.

Preferred cycloaliphatic epoxides of general formula **(III-a)** include, but are not limited to: 3,4-epoxycyclohexylmethyl-3,4-epoxycyclohexanecarboxylate, 3,4-epoxy-6-methylcyclohexylmethyl-3,4-epoxy-6-methylcyclohexanecarboxylate, 3,4-epoxy-2-methylcyclohexylmethyl-3,4-epoxy-2-methyl-cyclohexanecarboxylate, and 3,4-epoxy-4-methylcyclohexylmethyl-3,4-epoxy-4-methylcyclohexanecarboxylate.

Preferred cycloaliphatic epoxides of general formula **(III-b)** include, but are not limited to: bis(3,4-epoxycyclohexylmethyl)adipate, bis(3,4-epoxy-6-methylcyclohexylmethyl)adipate, bis(3,4-epoxycyclohexylmethyl)oxalate, bis(3,4-epoxycyclohexylmethyl)pimelate, and bis(3,4-epoxycyclohexylmethyl)sebacate.

A preferred cycloaliphatic epoxide of general formula **(III-c)** is 2-(3,4-epoxycyclohexyl-5,5-spiro-3,4-epoxy)cyclohexane-meta-dioxane.

Further cycloaliphatic epoxides include a cycloaliphatic epoxide of general formula **(IV-a)** and a cycloaliphatic epoxide of general formula **(IV-b),** which are optionally substituted by one or more linear or branched alkyl groups containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl)

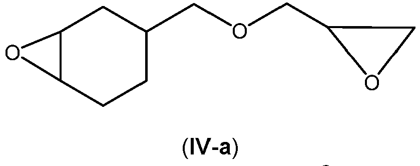

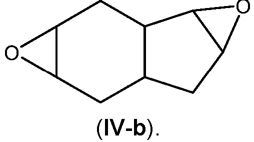

The cycloaliphatic epoxides described herein may be hydroxy modified or (meth)acrylate modified. Examples are commercially available under the name Cyclomer A400 (CAS: 64630-63-3) and Cyclomer M100 (CAS number: 82428-30-6) by Daicel Corp., or TTA 15 and TTA16 46by TetraChem/Jiangsu.

The one or more cationically curable monomers other than the cycloaliphatic epoxide described herein are selected from the group consisting of: vinyl ethers, propenyl ethers, cyclic ethers other than a cycloaliphatic epoxide, including epoxides other than a cycloaliphatic epoxide, oxetanes, and tetrahydrofuranes, lactones, cyclic thioethers, vinyl thioethers, propenyl thioethers, hydroxyl-containing compounds, and mixtures thereof, preferably from the group consisting of: vinyl ethers, cyclic ethers other than a cycloaliphatic epoxide, particularly oxetanes, and mixtures thereof.

Vinyl ethers are known in the art to accelerate curing and reduce tackiness, thus limiting the risk of blocking and set-off when the coated sheets are put in stacks just after coating. They also improve the physical and chemical resistance of the protective coating, and enhance its flexibility and its adhesion to the substrate, which is particularly advantageous for coating plastic and polymer substrates. Vinyl ethers also help reducing the viscosity of the varnish, while strongly co-polymerizing with the varnish vehicle. Examples of preferred vinyl ethers to be used in the cationic UV-LED radiation curable protective varnish claimed herein include methyl vinyl ether, ethyl vinyl ether, *n*-propyl vinyl ether, *n*-butyl vinyl ether, *iso*-butyl vinyl ether, ethylhexyl vinyl ether, octadecyl vinyl ether, dodecyl vinyl ether, isopropyl vinyl ether, *tert-*butyl vinyl ether, *tert-*amyl vinyl ether, cyclohexyl vinyl ether, cyclohexanedimethanol monovinyl ether, cyclohexanedimethanol divinyl ether, 4-(vinyloxy methyl)cyclohexylmethyl benzoate, phenyl vinyl ether, methylphenyl vinyl ether, methoxyphenyl vinyl ether, 2-chloroethyl vinyl ether, 2-hydroxyethyl vinyl ether, 4-hydroxybutyl vinyl ether, 1,6-hexanediol monovinyl ether, ethylene glycol divinyl ether, ethylene glycol monovinyl ether, 1, 4-butanediol divinyl ether, 1,6-hexanediol divinyl ether, 4-(vinyloxy)butyl benzoate, bis[4-(vinyl oxy)butyl]adipate, bis[4-(vinyloxy)butyl]succinate, bis[4-(vinyloxymethyl) cyclohexylmethyl] glutarate, 4-(vinyloxy)butyl stearate, trimethylolpropane trivinyl ether, propenyl ether of propylene carbonate, diethylene glycol monovinyl ether, diethylene glycol divinyl ether, ethylene glycol butylvinyl ether, dipropylene glycol divinyl ether, triethylene glycol divinyl ether, triethylene glycol methyl vinyl ether, triethylene glycol monobutyl vinylether, tetraethylene glycol divinyl ether, poly(tetrahydrofuran) divinyl ether, polyethyleneglycol-520 methyl vinyl ether, pluriol-E200 divinyl ether, tris[4-(vinyloxy)butyl]trimellitate, 1,4-bis(2-vinyloxyethoxy) benzene, 2,2-bis(4-vinyloxyethoxyphenyl)propane, bis[4-(vinyloxy)methyl]cyclohexyl] methyl] terephthalate, bis[4-(vinyloxy)methyl]cyclohexyl]methyl] isophthalate. Suitable vinyl ethers are commercially sold by BASF under the designation EVE, IBVE, DDVE, ODVE, BDDVE, DVE-2, DVE-3, CHVE, CHDM-di, HBVE. The one or more vinyl ethers described herein may be hydroxy modified or (meth)acrylate modified (for example: VEEA, 2-(2-vinyloxyethoxy)ethyl acrylate from Nippon Shokubai (CAS: 86273-46-3)).

The use of epoxides other than a cycloaliphatic epoxide in the cationic UV-LED radiation curable protective varnish claimed and described herein aids in accelerating curing and reducing tackiness, as well as in reducing the viscosity of the varnish, while strongly co-polymerizing with the varnish vehicle. Preferred examples of an epoxide other than a cycloaliphatic epoxide as described herein include, but are not limited to, cyclohexane dimethanol diglycidylether, poly(ethyleneglycol) diglycidyl ether, poly(propyleneglycol) diglycidyl ether, butanediol diglycidyl ether, hexanediol diglycidyl ether, bisphenol-A diglycidyl ether, neopentylglycol diglycidylether, trimethylolpropane triglycidyl ether, glycerol triglycidyl ether, pentaerythritol tetraglycidyl ether, butyl glycidyl ether, p-tert-butyl phenyl glycidyl ether, hexadecyl glycidyl ether, 2-ethyl-hexyl glycidyl ether, octyl glycidyl ether, decyl glycidyl ether, dodecyl glycidyl ether, tetradecyl glycidyl ether, C₁₂/C₁₄-alkyl glycidyl ether, C₁₃/C₁₅-alkyl glycidyl ether and mixtures thereof. Suitable epoxides other than a cycloaliphatic epoxide are commercially sold by EMS Griltech under the trademark Grilonit^{®} (e.g. Grilonit^{®} V51-63 or RV 1806).

A preferred embodiment according to the present invention is directed to a cationic UV-LED radiation curable protective varnish as claimed and described herein comprising:
**a)** from about 65 wt-% to about 90 wt-%, preferably from about 70 wt-% to about 90 wt-%, of a mixture of a cycloaliphatic epoxide and one or more oxetanes.

Oxetanes are known in the art to accelerate curing and reduce tackiness, thus limiting the risk of blocking and set-off when the printed sheets are put in stacks just after coating. They also help reducing the viscosity of the varnish, while strongly co-polymerizing with the varnish vehicle. Preferred examples of oxetanes include trimethylene oxide, 3,3-dimethyloxetane, trimethylolpropane oxetane, 3-ethyl-3-hydroxymethyl oxetane, 3-ethyl-3-[(2-ethylhexyloxy) methyl]oxetane, 3,3-dicyclomethyl oxetane, 3-ethyl-3-phenoxymethyl oxetane, bis ([1-ethyl(3-oxetanyl)]methyl) ether, 1,4-bis [3-ethyl-3-oxetanyl methoxy)methyl]benzene, 3,3-dimethyl-2(*p*-methoxy-phenyl)-oxetane, 3-ethyl-[(tri-ethoxysilyl propoxy)methyl]oxetane, 4,4-bis(3-ethyl-3-oxetanyl)methoxymethyl]biphenyl and 3,3-dimethyl-2(*p*-methoxy-phenyl) oxetane. The one or more oxetanes described herein may be hydroxy modified (for example: *Curalite*^{™}Ox from Perstorp (CAS Nr: 3047-32-3)) or (meth)acrylate modified (for example: UVi-Cure S170 from Lambson (CAS Nr: 37674-57-0)).

The cationic UV-LED radiation curable protective varnish claimed and described herein comprises
**c)** from about 0.01 wt-% to about 5 wt-%, preferably from about 0.05 wt-% to about 3 wt-%, more preferably from about 0.1 wt-% to about 2 wt-%, even more preferably from about 0.2 wt-% to about 1 wt-%, of a non-ionic surfactant.

As well known to a skilled person, a non-ionic surfactant contains a hydrophilic moiety and a hydrophobic moiety and carries no charge. Preferably, the non-ionic surfactant used in the cationic UV-LED curable protective varnish claimed and described herein has a molecular weight of between about 200 g/mol and about 3000 g/mol, and/or contains one or more functional groups selected from hydroxyl and epoxide groups. More preferably, the non-ionic surfactant is selected from a non-ionic fluorinated surfactant and a non-ionic silicone surfactant.

As used herein the term "non-ionic fluorinated surfactant" includes non-ionic perfluoropolyether surfactants and non-ionic fluorosurfactants.

As used herein, the term "non-ionic perfluoropolyether surfactant" denotes a non-ionic surfactant comprising a perfluoropolyether backbone and one or more, preferably two or more, terminal functional groups selected from the group consisting of: hydroxyl, epoxide, acrylate, methacrylate and trialkoxysilyl, preferably selected from the group consisting of hydroxyl and epoxide. Preferably, the non-ionic perfluoropolyether surfactant is characterized by an average molecular weight (Mₙ) below about 2000 [g/mol]. As used herein, a perfluoropolyether backbone denotes a residue of a perfluoropolyether polymer comprising randomly distributed recurring units selected from perfluoromethyleneoxy (-CF₂O-) and perfluoroethyleneoxy (-CF₂-CF₂O-). The perfluoropolyether residue is connected to the terminal functional group directly or *via* a spacer selected from methylene(oxyethylene), 1,1-difluoroethylene-(oxyethylene), methylene-di(oxyethylene), 1,1-difluoroethylene-di(oxyethylene), methylene-tri(oxyethylene), 1,1-difluoroethylene-tri(oxyethylene), methylene-tetra(oxyethylene), 1,1-difluoroethylene-tetra(oxyethylene), methylene-penta(oxyethylene), 1,1-difluoroethylene-penta(oxyethylene), and a linear or branched hydrocarbon group, optionally fluorinated at the carbon atom connecting the spacer to the perfluoropolyether residue, containing one or more urethane groups, or one or more amide groups, and optionally one or more cyclic moieties, including saturated cyclic moieties (such as cyclohexylene) and aromatic cyclic moieties (such as phenylene). Preferably, the non-ionic perfluoropolyether surfactant is functionalized with one or more hydroxyl and/or epoxide functional groups.

Preferably, the non-ionic perfluoropolyether surfactant is a compound of general formula **(V)** having an average molecular weight (Mₙ) from about 1200 [g/mol] to about 2000 [g/mol] 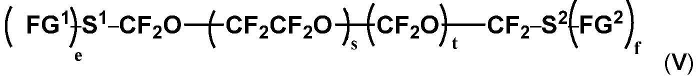 wherein
**f** and **e** are independently of each other integers selected from 1, 2 and 3;
**FG¹** and **FG²** are terminal functional groups selected independently of each other from the group consisting of: 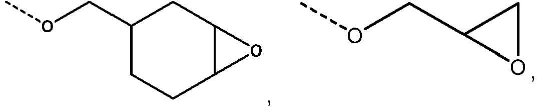 -OH, -OC(O)CH=CH₂, -OC(O)C(CH₃)=CH₂, and -Si(OR²⁰)₃;
**R²⁰** is a C₁-C₄alkyl group;
**-S¹-** represents a single bond or a spacer selected from: 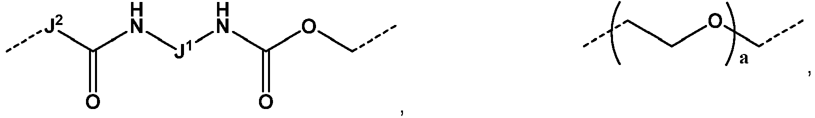 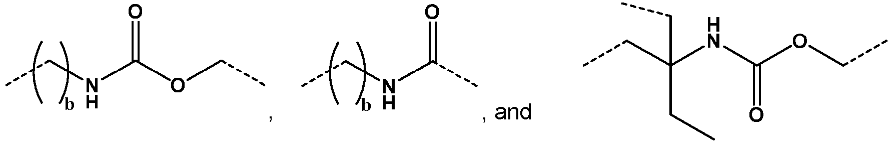 wherein
**-J¹-** is selected from 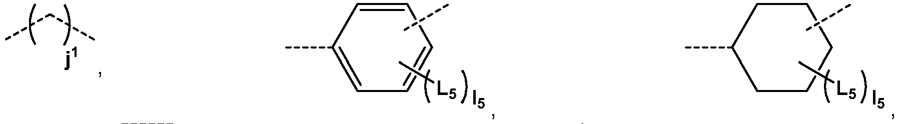 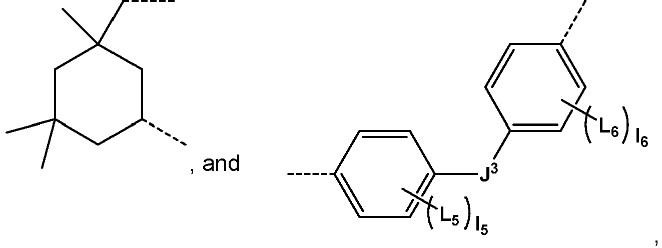
wherein
**j¹** is an integer comprised between 1 and 12, preferably between 4 and 10;
**L₅** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
**L₆** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
**I₅** and **I₆** are independently of each other integers comprised between 0 and 4, preferably comprised between 0 and 1; and
**-J³-** is selected from -O-, -CH₂-, -CH(CH₃)-, and -C(CH₃)₂-;
**-J²-** is selected from 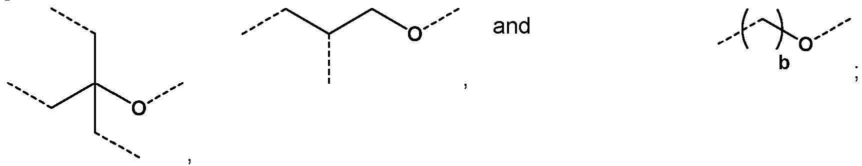
**a** is an integer comprised between 1 and 6, preferably between 1 and 3; and
**b** is an integer comprised between 1 and 6, preferably between 2 and 4;
**-S²-** represents a single bond or a spacer selected from 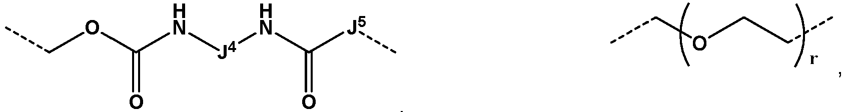 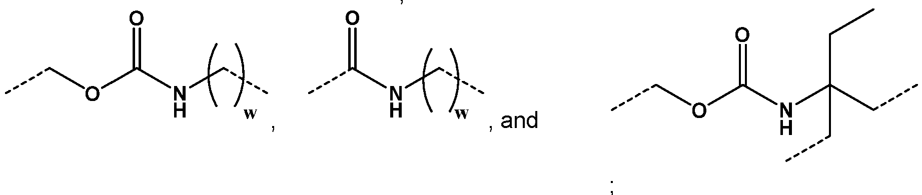
wherein
**-J⁴-** is selected from 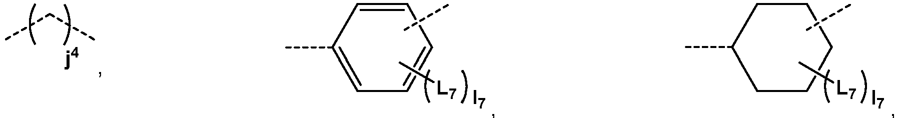 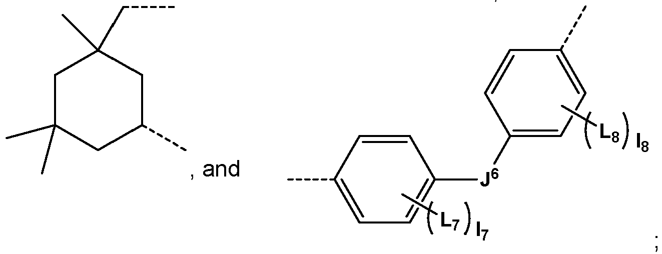
wherein
**j⁴** is an integer comprised between 1 and 12, preferably between 4 and 10;
**L₇** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
**L₈** can be the same, or different in each occurrence and is a linear or branched alkyl radical containing from one to ten carbon atoms (such as methyl, ethyl, *n*-propyl, *i*-propyl, *n*-butyl, *i*-butyl, *s*-butyl, *t*-butyl, hexyl, octyl, and decyl), and preferably containing from one to three carbon atoms (such as methyl, ethyl, *n*-propyl, and *i*-propyl);
**I₇** and **I₈** are independently of each other integers comprised between 0 and 4, preferably comprised between 0 and 1; and
**-J⁸-** is selected from -O-, -CH₂-, -CH(CH₃)-, and -C(CH₃)₂-;
**-J⁵-** is selected from 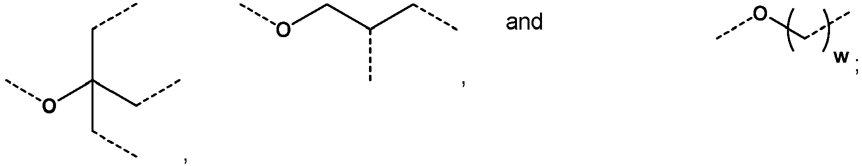
wherein
**r** is an integer comprised between 1 and 6, preferably between 1 and 3; and
**w** is an integer comprised between 1 and 6, preferably between 2 and 4;
   and
wherein **s** and **t** are integers chosen so that the average molecular weight (Mₙ) of the compound of general formula **(V)** is from about 1200 [g/mol] to about 2000 [g/mol].

Preferably, in general formula **(V), FG¹** and **FG²** represent independently of each other -OC(O)CH=CH₂, or -OC(O)C(CH₃)=CH₂;
**-S¹-** represents 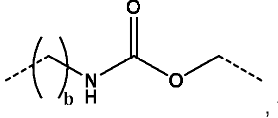 wherein **b** has the meaning defined herein; and
**-S²-** represents 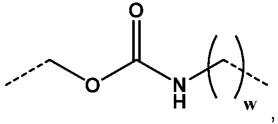 wherein **w** has the meaning defined herein.

More preferably, in general formula **(V), FG¹** and **FG²** represent -OH;
**-S¹-** represents a single bond or 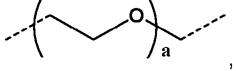 wherein **a** has the meaning defined herein;
**-S²-** represents a single bond or 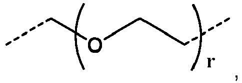 wherein **r** has the meaning defined herein; and the sum of **o** and **r** is comprised between 3 and 9.

Also preferably, in general formula (**V**), **FG¹** and **FG²** represent -Si(OR²⁰)₃;
**R²⁰** is a C₁-C₄alkyl group, preferably an ethyl group;
**-S¹-** represents 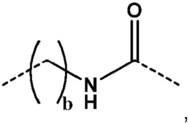 wherein **b** has the meaning defined herein; and
**-S²-** represents 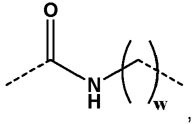 wherein **w** has the meaning defined herein. Thus, a preferred perfluoropolyether surfactant is a compound of general formula **(V-a)** 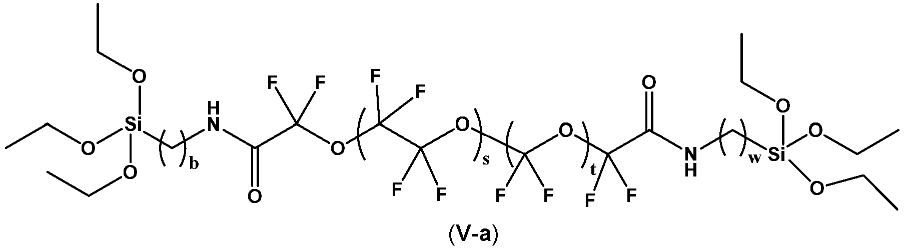
wherein
**b** and **w** are integers comprised between 1 and 6, preferably between 2 and 4;
**s** is a integer of between 2 and 6; and
**q** is an integer of between 2 and 4.

Particularly suitable examples of non-ionic perfluoropolyether surfactant are commercially available under the name Fluorolink^{®} E10H, Fluorolink^{®} MD700, Fluorolink^{®} MD500 Fluorolink^{®} AD1700, Fluorolink^{®} E-series, and Fluorolink^{®} S10 from Solvay.

As used herein the term "non-ionic fluorosurfactant" refers to a non-ionic surfactant containing a perfluoroalkyl chain CF₃(CF₂)ₓ, wherein x is an integer from 2 to 18. Preferably, the non-ionic fluorosurfactant is characterized by an average molecular weight (Mₙ) from about 200 [g/mol] to about 2000 [g/mol].

Preferably, the non-ionic fluorosurfactant is a compound of general formula (VI)

**CF₃(CF₂)ₓ(CH₂)_{y}E** (**VI**)

wherein
**x** is an integer from 2 to 18;
**y** is an integer from 0 to 8; and
**E** is selected from 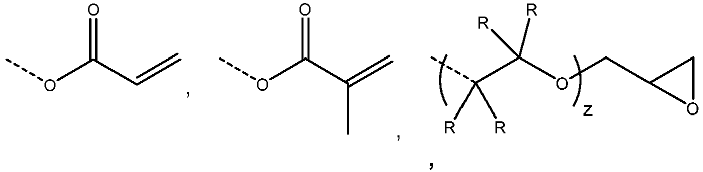 -(CR₂CR₂O)_{z}H,
and -OSi(OR²⁰)₃,
wherein **z** is an integer from 0 to 15;
**R** can be the same, or different in each occurrence, and is selected from hydrogen and methyl; and
**R²⁰** is a C₁-C₄alkyl group. In the general formula **(VI),** R preferably represents hydrogen.

A non-ionic fluorosurfactant of general formula **(VI-a)**

**CF₃(CF₂)ₓ(CH₂)_{y}(CR₂CR₂O)_{z}H** (**VI-a**)

wherein
**x** is an integer from 2 to 18;
**y** is an integer from 0 to 8;
**z** is an integer from 0 to 15; and
**R** can be the same, or different in each occurrence, and is selected from hydrogen and methyl, preferably hydrogen is especially preferred. Non-ionic fluorosurfactants of general formula **(VI-a)** are commercially available under the name CHEMGUARD S550-100 or CHEMGUARD S550, CHEMGUARD S222N, CHEMGUARD S559-100 or CHEMGUARD S559, all commercialized by CHEMGUARD; Capstone^{™} FS-31, Capstone^{™} FS-35, Capstone^{™} FS-34, Capstone^{™} FS-30, Capstone^{™} FS-3100, all commercialized by Chemours.

A non-ionic fluorosurfactant of general formula **(VI-b)**

**CF₃(CF₂)ₓ(CH₂)_{y}OSi(OR²⁰)** (**VI-b**),

wherein
**x** is an integer from 2 to 18;
**y** is an integer from 0 to 8; and
**R²⁰** is a C₁-C₄alkyl group, is also preferred. Non-ionic fluorosurfactants of general formula **(VI-b)** are commercially available under the name Dynasylan F8261 and Dynasylan F8263 commercialized by Evonik.

A non-ionic fluorosurfactant of general formula **(VI-c)** 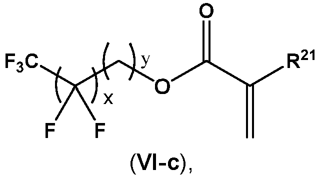 wherein
**x** is an integer from 2 to 18;
**y** is an integer from 0 to 8; and
**R²¹** is selected from hydrogen and a methyl group, is also preferred. Examples of non-ionic fluorosurfactants of general formula **(VI-c)** include, but are not limited to: 1*H*,1*H*,2*H*,2*H-*perfluorooctyl acrylate (Sigma-Aldrich), 1*H*,1*H*,2*H*,2*H*-perfluorooctyl methacrylate (Sigma-Aldrich), 1*H*,1*H*-perfluorooctyl acrylate (Sigma-Aldrich), 1*H*,1*H*-perfluorooctyl methacrylate (Sigma-Aldrich), 1*H*,1*H*-perfluoroheptyl acrylate (Sigma-Aldrich) and 1*H*,1*H*-perfluoroheptyl methacrylate (Sigma-Aldrich).

As used herein a non-ionic silicone surfactant refers to a non-ionic surfactant comprising a silicone backbone containing randomly distributed recurring units selected from di(methyl)siloxane (-(CH₃)₂SiO-) and/or methyl-(C₂-C₁₀-alkyl)-siloxane (-(CH₃)(C₂-C_{1O}-alkyl)SiO-), wherein one or more methyl groups and/or C₂-C₁₀-alkyl groups may be independently of each other substituted by an aryl group, a polyester, optionally presenting a terminal functional group selected from hydroxyl, epoxide, and (meth)acrylate, a polyether, such as polyalkylene glycol, including polyethylene glycol and polypropylene glycol, optionally presenting a terminal functional group selected from hydroxyl, epoxide and (meth)acrylate, a hydroxyl group, an epoxide group, or a (meth)acrylate group, and/or wherein the silicone backbone may be connected directly or *via* a spacer to a terminal functional group selected from a hydroxyl group, an epoxide group, and a (meth)acrylate group. The silicone backbone described herein may be connected to an aliphatic urethane acrylate or to a fluorine-containing aliphatic urethane acrylate. Preferably, the non-ionic silicone surfactant is characterized by an average molecular weight lower than about 3000 [g/mol].

Non-ionic silicone surfactants include, but are not limited to poly-methyl-alkyl-siloxane, such as BYK-077 and BYK-085 commercialized by BYK, polyester-modified poly-dimethyl-siloxane, such as BYK 310 commercialized by BYK, polyether-modified poly-dimethyl-siloxane, such as BYK-377, BYK-333, BYK-345, BYK-346 and BYK-348 commercialized by BYK, polyester-modified poly-methyl-alkyl-siloxane, such as BYK-315 commercialized by BYK, polyether-modified poly-methyl-alkyl-siloxane, such as BYK-341, BYK-320 and BYK-325 commercialized by BYK, hydroxy-functional poly-dimethyl-siloxane, such as TEGOMER^{®} HSI-2311 commercialized by Evonik, polyester-modified hydroxy-functional poly-dimethyl-siloxane, such as BYK-370 and BYK-373 commercialized by BYK, polyether-modified hydroxy-functional poly-dimethyl-siloxane, such as BYK-308 commercialized by BYK, polyether-polyester modified hydroxy-functional poly-dimethyl-siloxane, such as BYK-375 commercialized by BYK, epoxy-functional poly-dimethyl-siloxane, such as TEGOMER^{®} E-Si 2330 commercialized by Evonik, acryloxy-functional poly-dimethyl-siloxane, such as TEGOMER^{®} V-SI 2250 and TEGO^{®} Rad 2700 commercialized by Evonik, polyester-modified acrylic functional poly-dimethyl-siloxane, such as BYK-371 commercialized by BYK, polyether-modified acrylic functional poly-dimethyl-siloxane, such as TEGO^{®} Rad 2100 and TEGO^{®} Rad 2500 commercialized by Evonik, silicone-modified aliphatic urethane acrylate, such as SUO-S3000 and SUO-S600NM commercialized by Polygon, silicone- and fluorine-modified aliphatic urethane acrylate, such as SUO-FS500 commercialized by Polygon.

To facilitate the security documents storing, stacking and grasping, in particular banknotes storing, stacking and grasping, the cationic UV-LED radiation curable protective varnish claimed and described herein may contain a matting agent, which provides a matt protective coating with a better grip. Moreover, a matt protective coating has the advantage of retaining the users' accustomed perception of security documents by the sense of touch, and causes much less reflection than a glossy protective coating, thereby, enabling machine checking and authentication of security documents with the optical sensors customarily used. The matting agent may be present in an amount from about 1 wt-% to about 12 wt-%, the weight percents (wt-%) being based on the total weight of the cationic UV-LED radiation curable protective varnish.

As well known to the skilled person, the use of matting agents should be avoided in the cationic UV-LED radiation curable protective varnishes intended for production of glossy protective coatings that can be useful for example for protecting the surface of an overt security feature present in a security document. A cationic UV-LED radiation curable protective varnish as claimed and described herein, which is free of matting agents, provides a glossy protective coating, which is conspicuous and draws the layperson's attention to the security feature covered by the glossy lacquer, thereby aiding the unexperienced users to easily find the security feature on the security document. Such cationic UV-LED radiation curable protective varnish can be applied directly on the surface of a security feature present in a security document. Furthermore, such matting agent free cationic UV-LED radiation curable protective varnish may be useful for producing glossy discontinuous protective coatings for security documents as described in the international patent application publication number WO2011120917A1, which present a matt protective coating applied directly on the surface of the security document and a glossy protective coating, which partially covers the surface of the matt protective coating.

The matting agent is preferably selected from inorganic particles and resin particles. Examples of inorganic particles and resin particles include, but are not limited to thermoplastic polymer matting agents, such as thermoplastic polymer microspheres and micronized polyolefin waxes, calcium carbonate matting agents, such as core/shell microparticles comprising a calcium carbonate core and a hydroxyapatite shell, sold under the tradename Omyamatt^{®} 100 by Omya, aluminium oxide matting agents, aluminosilicate matting agents, and amorphous silicon dioxide particles having a porous structure, such as fumed amorphous silicon dioxide particles, precipitated amorphous silicon dioxide particles and amorphous silicon dioxide particles obtained from the sol-gel process.

Preferably, the matting agent is selected from amorphous silicon dioxide particles having a porous structure including organic surface treated amorphous silicon dioxide particles. Such matting agent presents low refractive index resulting in good transmission properties.

The matting agent is preferably characterized by a D50 value in the range of from about 1µm to about 25µm, preferably from 2µm to about 15µm, more preferably between about 3µm and about 10µm, as determined by laser diffraction.

Suitable amorphous silicon dioxide particles having a porous structure are commercially available under the name Syloid^{®} from Grace (such as Syloid^{®} C906, Rad 2105, 7000, ED30), Acematt^{®} from Evonik (such as Acematt^{®} OK412, OK500, OK520, OK607, OK900, 3600, TS 100), PPG Lo-Vel^{®} from PPG (such as PPG Lo-Vel^{®} 66, 2023, 8100, 8300), Gasil^{®} from PQ Corporation (such as Gasil^{®} UV55C, UV70C, HP210, HP240, HP380, HP860).

The cationic UV-LED radiation curable protective varnish may contain up to 10 wt-% of an organic solvent, the weight percents being based on the total weight of the cationic UV-LED radiation curable protective varnish. Preferably, the organic solvent is present in an amount from about 1 wt-% to about 7.5 wt-%, more preferably from about 2 wt-% to about 5 wt-%. Preferably, the organic solvent is a polar organic solvent selected from alcohols, glycols, glycol ethers, glycol esters and cyclic carbonates, preferably having a boiling point higher than about 80°C, more preferably higher than about 100°C.

The cationic UV-LED radiation curable protective varnish claimed and described herein may further contain one or more additives including without limitation antifoaming agents, defoaming agents, UV absorbers, anti-sedimentation stabilizers, antimicrobial agents, virucidal agents, biocidal agents, fungicides, and combinations thereof.

The cationic UV-LED radiation curable protective varnish described and claimed herein may be prepared by mixing either the cycloaliphatic epoxide, or the mixture of the cycloaliphatic epoxide and the one or more cationically curable monomers other than the cycloaliphatic epoxide, with the organic solvent when present, the one or more additives when present, the matting agent when present, the non-ionic surfactant, the photosensitizer of general formula (**I**) and the diaryl iodonium salt. Preferably, the solid ingredients of the cationic UV-LED radiation curable protective varnish are dispersed in the mixture of the liquid ingredients contained by said protective varnish. The non-ionic surfactant, the photosensitizer of general formula **(I)** and the diaryl iodonium salt may be added to the mixture either during the dispersing or mixing step of all other ingredients, or at a later stage (i.e. just before the application of the cationic UV-LED radiation curable protective varnish on a surface of a substrate of a security document and/or on a surface of one or more security features of a security document) simultaneously, or in sequence.

Preferably the cationic UV-LED radiation curable protective varnish is a flexography printing varnish, an inkjet printing varnish, or a screen printing varnish, more preferably a flexography printing varnish.

In a preferred embodiment, the cationic UV-LED radiation curable protective varnish is a flexography printing varnish. Flexography printing preferably uses a unit with a doctor blade, preferably a chambered doctor blade, an anilox roller and plate cylinder. The anilox roller advantageously has small cells whose volume and/or density determines the curable varnish application rate. The doctor blade lies against the anilox roller, and scraps off varnish surplus at the same time. The anilox roller transfers the varnish to the plate cylinder, which finally transfers the varnish to the substrate. Specific design might be achieved using a designed photopolymer plate. Plate cylinders can be made from polymeric or elastomeric materials.

Polymers are mainly used as photopolymer in plates and sometimes as a seamless coating on a sleeve. Photopolymer plates are made from light-sensitive polymers that are hardened by ultraviolet (UV) light. Photopolymer plates are cut to the required size and placed in an UV light exposure unit. One side of the plate is completely exposed to UV light to harden or cure the base of the plate. The plate is then turned over, a negative of the job is mounted over the uncured side and the plate is further exposed to UV light. This hardens the plate in the image areas. The plate is then processed to remove the unhardened photopolymer from the nonimage areas, which lowers the plate surface in these nonimage areas. After processing, the plate is dried and given a post-exposure dose of UV light to cure the whole plate. Preparation of plate cylinders for flexography is described in Printing Technology, J. M. Adams and P.A. Dolin, Delmar Thomson Learning, 5th Edition, pages 359-360. To be suitable to be printed by flexography, the cationic UV-LED radiation curable protective varnish must have a viscosity in the range of about 50 to about 500 mPas at 25°C measured using a Brookfield viscometer (model "DV-I Prime) equipped with a spindle S21 at 100 rpm for measuring viscosities comprised between 100 mPas and 500 mPas at 25°C, or using a rotational viscosimeter DHR-2 from TA Instruments (cone-plane geometry, diameter 40 mm) for viscosities below 100 mPas at 25°C and 1000 s⁻¹.

In a further preferred embodiment according to the present invention, the cationic UV-LED radiation curable protective varnish is an inkjet printing varnish, preferably a drop-on-demand (DOD) inkjet printing varnish. Drop-on-demand (DOD) printing is a non-contact printing process, wherein the droplets are only produced when required for printing, and generally by an ejection mechanism rather than by destabilizing a jet. Depending on the mechanism used in the printhead to produce droplets, the DOD printing is divided in piezo impulse, thermal jet and valve jet. To be suitable for DOD inkjet printing, the cationic UV-LED radiation curable protective varnish must have low viscosity of less than about 20 cP at jetting temperature and a surface tension lower than about 45 N/m.

In a still preferred embodiment according to the present invention, the cationic UV-LED radiation curable protective varnish is a screen printing varnish. As well known to those skilled in the art, screen printing (also referred in the art as silkscreen printing) is a printing technique that typically uses a screen made of woven mesh to support an ink-blocking stencil. The attached stencil forms open areas of mesh that transfer varnish as a sharp-edged image onto a substrate. A squeegee is moved across the screen with ink-blocking stencil, forcing varnish past the threads of the woven mesh in the open areas. A significant characteristic of screen printing is that a greater thickness of the varnish can be applied on the substrate than with other printing techniques. Screen printing is therefore also preferred when varnish deposits with the thickness having a value between about 10 to 50 µm or greater are required which cannot (easily) be achieved with other printing techniques. Generally, a screen is made of a piece of porous, finely woven fabric called mesh stretched over a frame of e.g. aluminum or wood. Currently most meshes are made of man-made materials such as synthetic or steel threads. Preferred synthetic materials are nylon or polyester threads.

In addition to screens made on the basis of a woven mesh based on synthetic or metal threads, screens have been developed out of a solid metal sheet with a grid of holes. Such screens are prepared by a process comprising of electrolytically forming a metal screen by forming in a first electrolytic bath a screen skeleton upon a matrix provided with a separating agent, stripping the formed screen skeleton from the matrix and subjecting the screen skeleton to an electrolysis in a second electrolytic bath in order to deposit metal onto said skeleton.

There are three types of screen printing presses, namely flat-bed, cylinder and rotary screen printing presses. Flat-bed and cylinder screen printing presses are similar in that both use a flat screen and a three-step reciprocating process to perform the printing operation. The screen is first moved into position over the substrate, the squeegee is then pressed against the mesh and drawn over the image area, and then the screen is lifted away from the substrate to complete the process. With a flat-bed press the substrate to be printed is typically positioned on a horizontal print bed that is parallel to the screen. With a cylinder press the substrate is mounted on a cylinder. Flat-bed and cylinder screen printing processes are discontinuous processes, and consequently limited in speed which is generally at maximum 45 m/min in web or 3'000 sheets/hour in a sheet-fed process.

Conversely, rotary screen presses are designed for continuous, high speed printing. The screens used on rotary screen presses are for instance thin metal cylinders that are usually obtained using the electroforming method described hereabove or made of woven steel threads. The open-ended cylinders are capped at both ends and fitted into blocks at the side of the press. During printing, the varnish is pumped into one end of the cylinder so that a fresh supply is constantly maintained. The squeegee is fixed inside the rotating screen and squeegee pressure is maintained and adjusted to allow a good and constant print quality. The advantage of rotary screen presses is the speed which can reach easily 150 m/min in web or 10'000 sheets/hour in a sheet-fed process.

Screen printing is further described for example in The Printing Ink Manual, R.H. Leach and R.J. Pierce, Springer Edition, 5th Edition, pages 58-62, in Printing Technology, J. M. Adams and P.A. Dolin, Delmar Thomson Learning, 5th Edition, pages 293-328 and in Handbook of Print Media, H. Kipphan, Springer, pages 409-422 and pages 498-499.

The cationic UV-LED radiation curable protective varnish claimed and described herein is curable by exposure to UV light, preferably by exposure to one or more wavelengths of between about 365 nm and about 405 nm, more preferably by exposure to UV light at 365 nm and/or 385 nm and/or 395 nm, emitted by one or more UV-LED light sources. As well-known by the person skilled in the art, the cationic UV-LED radiation curable protective varnish claimed and described herein is also suitable for curing using medium-pressure mercury lamps.

Another aspect according to the present invention relates to a process for coating a security document comprising a substrate and one or more security features applied on or inserted into a portion of the substrate, wherein said process comprises the following steps:
**i)** applying, preferably by a printing method selected from flexography printing, inkjet printing, and screen printing, the cationic UV-LED radiation curable protective varnish claimed and described herein on a surface of the substrate and/or a surface of the one or more security features of the security document so as to form a varnish layer; and
**ii)** curing the varnish layer by exposure to UV light emitted by a UV-LED source so as to form a protective coating covering the surface of the substrate and/or the surface of the one or more security features of the security document.

Preferably, at least one of the one or more security features applied on or inserted into a portion of the substrate of the security document to be coated is a UV light excitable luminescent security feature i.e. a security feature that emits light in response to excitation by UV light, in particular to UV light having a wavelength of 254 nm or 366 nm.

Preferably, step **ii)** described herein consists of exposing the varnish layer to one or more wavelengths of between about 365 nm and about 405 nm emitted by one or more UV-LED sources so as to form a protective coating covering the surface of the substrate and/or the surface of the one or more security features of the security document. Typically, commercially available UV-LED sources use one or more wavelengths, such as for example 365 nm, 385 nm, 395 nm and 405 nm. Preferably, step **ii)** described herein consists of exposing the varnish layer to a single wavelength between 365 nm and 405 nm, such as for example 365 nm, 385 nm, 395 nm or 405 nm, emitted by a UV-LED source so as to form a protective coating covering the surface of the substrate and/or the surface of the one or more security features of the security document. The varnish layer is preferably exposed to UV light at a dose of at least 150 mJ/cm², more preferably at a dose of at least 200 mJ/cm², and especially preferably at a dose of at least 220 mJ/cm² so as to cure the varnish layer and to form a protective coating covering the surface of the substrate and/or the surface of the one or more security features of the security document. As described hereafter, the dose may be measured using a UV Power Puck^{®} II radiometer from EIT, Inc., U.S.A.

As used herein, the term "substrate" includes any security document substrate into a portion of which a security feature can be inserted and/or to which a security feature can be applied. Security document substrates include without limitation, papers or other fibrous materials such as cellulose, paper-containing materials, plastics and polymers, composite materials and mixtures or combinations thereof. Typical paper, paper-like or other fibrous materials are made from a variety of fibers including without limitation abaca, cotton, linen, wood pulp, and blends thereof. As well known to those skilled in the art, cotton and cotton/linen blends are preferred for banknotes, while wood pulp is commonly used in non-banknote security documents. Typical examples of plastics and polymers include polyolefins, such as polyethylene (PE) and polypropylene (PP), polyamides, polyesters such as poly(ethylene terephthalate) (PET), poly(1,4-butylene terephthalate) (PBT), poly(ethylene 2,6-naphthoate) (PEN) and polyvinylchlorides (PVC). Typical examples of composite materials include without limitation multilayer structures or laminates of paper and at least one plastic or polymer material, such as those described hereabove. The substrate of the security document may be printed with any desired signs, including any symbols, images and patterns, and/or may include one or more security features, including luminescent security features.

A further aspect according to the present invention is directed to a security document comprising a substrate, one or more security features applied on or inserted into a portion of the substrate and a protective coating covering a surface of the substrate and/or a surface of the one or more security features of the security document, wherein the protective coating is obtained by the coating process claimed and described herein comprising the following steps:
**i)** applying, preferably by a printing method selected from flexography printing, inkjet printing, and screen printing, more preferably by flexography printing, the cationic UV-LED radiation curable protective varnish claimed and described herein on a surface of the substrate and/or a surface of the one or more security features of the security document so as to form a varnish layer; and
**ii)** curing the varnish layer by exposure to UV light emitted by a UV-LED source so as to form a protective coating covering the surface of the substrate and/or the surface of the one or more security features of the security document.

The security document according to the present invention may comprise on one of its sides a protective coating-free region of between about 5 and about 15% of the substrate surface, wherein the percentages are based on the total surface of the security document. Preferably, said protective coating-free region is present on at least one edge or corner of the substrate. The protective coating-free region may be used for example for numbering the security document. If the security document is a banknote, the coating-free region may be additionally used for adsorbing a staining (indelible) ink used for protecting banknotes against theft and robbery as described in the international patent application publication no. WO2013127715A2.

A further aspect according to the present invention is directed to a protective coating for a security document comprising a substrate, and one or more security features applied on or inserted into a portion of the substrate, wherein the protective coating is obtained from the cationic UV-LED radiation curable protective varnish claimed and described herein. Specifically, the above-mentioned protective coating is obtained by:
**i)** applying, preferably by a printing method selected from flexography printing, inkjet printing, and screen printing, more preferably by flexography printing, the cationic UV-LED radiation curable protective varnish claimed and described herein on a surface of the substrate and/or a surface of the one or more security features of the security document so as to form a varnish layer; and
**ii)** curing the varnish layer by exposure to UV light emitted by a UV-LED source so as to form a protective coating covering the surface of the substrate and/or the surface of the one or more security features of the security document.

Preferably, at least one of the one or more security features applied on or inserted into a portion of the substrate of the security document to be coated is a UV light excitable luminescent security feature i.e. a security feature that emits light in response to excitation by UV light, in particular to UV light having a wavelength of 254 nm or 366 nm.

As used herein, the term "security document" refers to a document having a value such as to render it potentially liable to attempts at counterfeiting or illegal reproduction and which is usually protected against counterfeit or fraud by at least one security feature. Typical examples of security documents include without limitation banknotes, deeds, tickets, checks, vouchers, fiscal stamps and tax labels, agreements and the like, identity documents such as passports, identity cards, visas, bank cards, credit cards, transaction cards, access documents, entrance tickets and the like.

### EXAMPLES

The present invention is now described in more details with reference to non-limiting examples. The examples and comparative examples below provide more details for the preparation of the cationic UV-LED radiation curable protective varnishes according to the invention.

### Photosensitizers

**Table 1A**

| | **Commercial Name (Supplier)** | **Structure, CAS No, and molecular weight** | | |
|---|---|---|---|---|
| | | 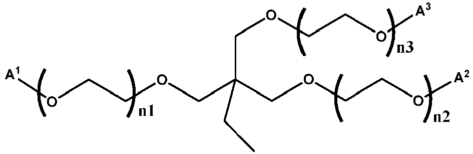 | | |
| | | with the sum n1+n2+n3 being from 3 to 12 and | | |
| S1 | Genopol* TX-2 (Rahn) | A¹=A²=A³= | 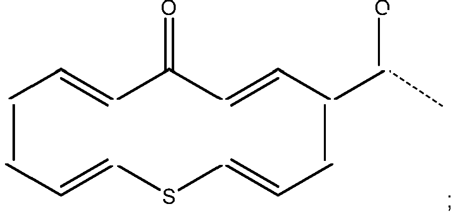 and/or | |
| | | | | |
| | | A¹= A²= | A³ = hydrogen; and/or | and |
| | | A¹ = | A² = A³ = hydrogen. | , and |
| | | | CAS Nr: 2055335-46 | |
| | | | 918 ± 12 q/mol eq. PS | |
| S2 | OMNIPOL TX (IGM Resins) | 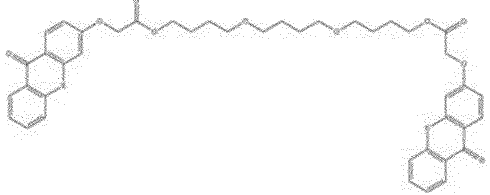 | | |
| | | CAS Nr: 813452-37-8 | | |
| | | 761 ± 17 q/mol eq. PS | | |
| S3 | Genocure* ITX (Rahn) | 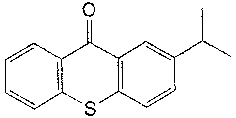 | | |
| | | CAS Nr: 5495-84-1 | | |
| | | 254.35 (SciFinder) | | |
| S4 | Speedcure CPTX (Lambson) | 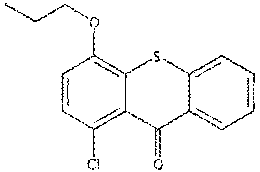 | | |
| | | CAS Nr : 142770-42-1 | | |
| | | 304.79 (SciFinder) | | |
| S5 | Anthracure^{®} UVS-1331 (Kawasaki Kasei) | 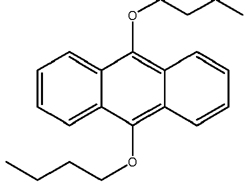 | | |
| | | CAS Nr : 76275-14-4 | | |
| | | 322.45g/mol (SciFinder) | | |

### Weight average molecular weight measurement

The weight average molecular weight of the oligomeric photosensitizers **S1-S2** was independently determined by GPC (gel permeation chromatography) according to the method described below (based on the OECD test method 118):
A Malvern Viskotek GPCmax was used. The device was equipped with an isocratic pump, a degasser, an autosampler and a triple detector TDA 302 comprising a differential refractometer, a viscosimeter and a double-angle light scattering detector (7° and 90°). For this specific measurement, only the differential refractometer was used. A calibration curve (log(molecular mass) = f(retention volume)) was established using six polystyrene standards (with molecular masses ranging from 472 to 512000g/mol). Two columns Viskotek TM4008L (column length 30.0 cm, internal diameter 8.0 mm) were coup UV-LED in series. The stationary phase was made of a styrene-divinylbenzene copolymer with a particle size of 6 µm and a maximum pore size of 3000 Å. During the measurement, the temperature was fixed at 35°C. The analyzed samples contained 10 mg/mL of the investigated compounds dissolved in THF (Acros, 99.9%, anhydrous) and were injected at a rate of 1 mL/min. The molecular mass of the compounds was calculated from the chromatogram as a polystyrene-equivalent weight average molecular weight (PS eq M_{W}), with a 95% confidence level and the average of three measurements of the same solution, using the following formula: ${M}_{w} = \frac{{\sum }_{i = 1}^{n} {H}_{i} {M}_{i}}{{\sum }_{i = 1}^{n} {H}_{i}}$ where *Hᵢ* is the level of the detector signal from the baseline for the retention volume *Vᵢ, Mᵢ* is the molecular weight of the compound fraction at the retention volume *Vᵢ* and *n* is number of data points. Omnisec 5.12 as provided with the device was used as a software. The PS eq M_{w} measured for **S1** and **S2** are indicated in **Table 1A** hereabove.

### Sulfur molar concentration in the thioxanthone-based photosensitizers S1 - S4

The sulfur molar concentration (mmol sulfur/g photosensitizer) corresponds to the molar concentration of the reactive thioxanthone-based moiety (mmol reactive thioxanthone-based moiety/g photosensitizer) and is used to ensure that all thioxanthone-based photosensitizers are used at equivalent molar concentration of the reactive thioxanthone-based moiety.

### Determination of the sulfur molar concentration in the oligomeric photosensitizers S1-S2 by ED-XRF

The sulfur molar concentration in the oligomeric photosensitizers **S1** and **S2** was determined by ED-XRF (Spectro XEPOS) using the internal standard addition technique and the sulfur atom signal. For each of the oligomeric photosensitizers **S1-S2** of **Table 1A,** three 50 mL solutions at 2 mg/mL of the corresponding photosensitizer in acetonitrile (Sigma-Aldrich, 99.9%) were prepared. From each solution, 5 mL samples were collected and increasing amounts of a 5 mg/mL solution of Genocure ITX (Rahn, 99.3% according to certificate of analysis) in acetonitrile were added. Each sample was completed to 10 mL with acetonitrile. The following solutions have been obtained and are provided in **Table 1B.**

**Table 1B**

| **Level** | **Solution S1-S2 [mL]** | **Solution ITX [mL]** | **Acetonitrile [mL]** |
|---|---|---|---|
| 0 | 5 | 0 | 5 |
| 1 | 5 | 1 | 4 |
| 2 | 5 | 3 | 2 |
| 3 | 5 | 4 | 1 |

Each sample was independently submitted to an ED-XRF measurement (Spectro XEPOS) and a spectrum was recorded. A blank measurement (pure acetonitrile) was deduced from all spectra. For each series of samples (triplicate measurement), the measured fluorescence intensity at 2.31keV (S Kα1 peak) was displayed as a function of the molar concentration (mmol/ml) of the sulfur contained by the added Genocure ITX and a linear regression was performed. The absolute value of the x-intercept of the regression line indicated the sulfur molar concentration present at level 0 in each sample. Average values (average of three measurements) are provided in **Table 1C.** The corresponding average value was used to determine the sulfur molar concentration in each of the oligomeric photosensitizers **S1-S2** (mmol sulfur/g photosensitizer) and to calculate the amount (wt-%) of oligomeric photosensitizers **S1-S2** to be added for the preparation of the examples and comparative examples. For the thioxanthone photosensitizers **S3-S4,** the sulfur molar concentration [mmol/g] was directly calculated from their known molecular structure.

**Table 1C** summarizes the determined (photosensitizers **S1** and **S2)** and calculated (photosensitizers **S3** and **S4)** sulfur molar concentration (mmol sulfur/g photosensitizer) corresponding to the molar concentration of the reactive thioxanthone-based moiety (mmol reactive thioxanthone-based moiety/g photosensitizer).

**Table 1C**

| Photosensitizer | Reactive thioxanthone-based moiety | Sulfur molar concentration (mmol sulfur / g photosensitizer) | Concentration reactive thioxanthone- based moiety (mmol reactive thioxanthone-based moiety / g photosensitizer) |
|---|---|---|---|
| **S1** | | 1.70 | 1.70 |
| **S2** | | 2.40 | 2.40 |
| **S3** | 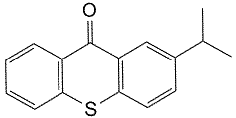 | 3.93 | 3.93 |
| **S4** | 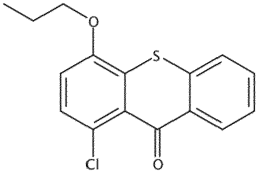 | 3.28 | 3.28 |

### Cationic photoinitiators

**Table 1D**

| | **Commercial Name (Supplier)** | **Structure, CAS No, and molecular weight** |
|---|---|---|
| P1 | Omnicat 440 (IGM Resins) | 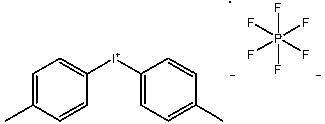 |
| | | 4,4'-dimethyl-diphenyl iodonium hexafluorophosphate (CAS Nr: 60565-88-0) |
| P2 | Speedcure 938 (Lambson) | 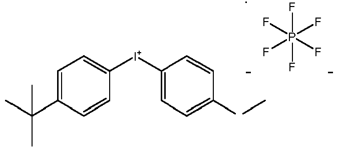 |
| | | bis(4-tert-butylphenyl)iodonium hexafluorophosphate (CAS Nr: 61358-25-6) |
| P3 | Speedcure 992 (Lambson) | 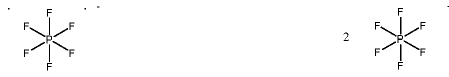 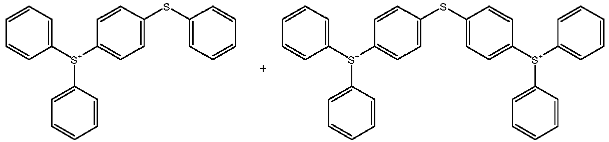 |
| | | 50wt-% propylene carbonate (CAS Nr: 108-32-7) + 50wt- % mixture of sulfonium, diphenyl[(phenylthio)phenyl]-, hexafluorophosphate(1-) (1:1) (68156-13-8) and sulfonium, S,S'-(thiodi-4,1-phenylene)bis[S,S-diphenyl-, hexafluorophosphate(1-) (1:2) (CAS Nr: 74227-35-3) |

### Other ingredients

**Table 1E**

| **Ingredient** | **Commercial name (supplier)** | **Chemical name (CAS number)** |
|---|---|---|
| Cycloaliphatic epoxide | Uvacure 1500 (Allnex) | 7-oxabicyclo[4.1.0]hept-3-ylmethyl 7-oxabicyclo[4.1.0]heptane-3-carboxylate (CAS Nr: 2386-87-0) |
| Oxetane | *Curalite*^{™}Ox (Perstorp) | 3-ethyloxetane-3-methanol (CAS Nr: 3047-32-3) |
| Antifoam agent | TEGO^{®} AIREX 900 (Evonik) | Siloxanes and Silicones, di-Me, reaction products with silica (CAS Nr: 67762-90-7) |
| Surfactant | BYK^{®}-330 (BYK) | 50% active ingredient (polyether modified polydimethylsiloxane; CAS Nr: not available) + 50% 2-methoxy-1-methylethyl acetate CAS Nr: 108-65-6) |
| Matting agent | ACEMATT^{®} TS 100 (Evonik) | Silica, amorphous, fumed, crystal-free (CAS Nr: 112945-52-5) |
| Solvent | n-butanol (BRENNTAG) | Butan-1-ol (CAS Nr: 71-36-3) |

### Preparation of the cationic UV-LED radiation curable protective varnishes (E1 - E5 and C1 - C9) and protective coatings obtained thereof

### A1. Preparation of cationic UV-LED radiation curable protective varnishes (E1 - E5) according to the invention and comparative experiments (C1 - C9) (Table 2A)

100g of each of the cationic UV-LED radiation curable protective varnishes **E1 - E5** and the comparative varnishes **C1 - C9** were prepared by first pre-mixing the two first ingredients (cycloaliphatic epoxide and oxetane) of **Table 2A** using a Dispermat (model CV-3) (10 min at 1000 rpm), then adding and dispersing the matting agent during about 15 minutes at 1500 rpm and finally adding the other ingredients and mixing further the so-obtained mixture during about 10 minutes at 1000 rpm. The cationic UV-LED radiation curable protective varnishes **E1 - E5** have viscosity properties that render them suitable for flexography printing and screen printing.

### A2. Preparation of protective coatings

The varnishes **E1 - E5** and **C1 - C9** were independently applied by hand on a piece of fiduciary polymer substrate (Guardian^{™} by CCL Secure) using a hand-coater unit with a n°0 bar (RK-print) to furnish a varnish layer having a size of approximately 5 cm x 10 cm and a thickness of about 4µm. Subsequently, each of the varnish layers was cured, under controlled relative humidity, by exposing said varnish layer two times at a speed of 150 m/min to UV light under a UV-LED curing unit LUV20 emitting at 385nm from IST Metz GmbH (100% lamp power with a 70% duty cycle and a nominal lamp-to-sample distance of 20mm leading to an approximate total delivered dose of 220 mJ/cm² . The dose was measured by passing a Powerpuck II apparatus under the UV-LED in similar conditions to the cured samples (same speed and same distance between lamp and sample/detector). The doses are given for a UV-A2 range, selected by a specific filter in the apparatus (370-415nm). The conditions used for curing the coated substrates are similar to the curing conditions expected in an industrial environment.

**Table 2A. Composition of the cationic UV-LED radiation curable protective varnishes E1 - E5 and C1 - C9**

| **Ingredient** | **Commercial name** | **C1** | **E1** | **E2** | **E3** | **E4** | **E5** | **C2** | **C3** | **C4** | **C5** | **C6** | **C7** | **C8** | **C9** |
|---|---|---|---|---|---|---|---|---|---|---|---|---|---|---|---|
| | | | | | | | | | | | | | | | |
| Cycloaliphatic epoxide | Uvacure 1500 | 72.32 | 71.94 | 71.94 | 71.55 | 70.90 | 70.40 | 69.90 | 72.80 | 72.23 | 72.80 | 72.40 | 72.80 | 72.48 | 70.00 |
| Oxetane | Curalite^{™}Ox | 15.05 | | | | | | | | | | | | | |
| Antifoam agent | TEGO^{®} AIREX 900 | 0.30 | | | | | | | | | | | | | |
| Surfactant | BYK^{®}-330 | 0.50 | | | | | | | | | | | | | |
| Matting agent | ACEMATT^{®} TS 100 | 5.25 | | | | | | | | | | | | | |
| Solvent | *n*-butanol | 3.00 | | | | | | | | | | | | | |
| Diaryliodonium photoinitiator | Omnicat 440 (P1) | 3.00 | 3.00 | | 3.00 | 3.00 | 3.00 | 3.00 | 3.00 | 3.00 | 3.00 | 3.00 | 3.00 | 3.00 | |
| | Speedcure 938* (P2) | | | 3.00 | | | | | | | | | | | |
| Triarylsulphonium photoinitiator | Speedcure 992 (P3) | | | | | | | | | | | | | | 5.40 |
| Thioxanthone photosensitizer | Genopol* TX-2 (S1) | 0.58 | 0.96 | 0.96 | 1.35 | 2.00 | 2.50 | 3.00 | | | | | | | |
| | Omnipol TX (S2) | | | | | | | | 0.1 | 0.67 | | | | | |
| | Speedcure CPTX (S3) | | | | | | | | | | 0.1 | 0.50 | | | |
| | Genocure* ITX (S4) | | | | | | | | | | | | 0.1 | 0.42 | |
| Alternative photosensitizer | Anthracure^{®} UVS-1331 (S5) | | | | | | | | | | | | | | 0.50 |
| *Concentration reactive thioxanthone-based moiety [mmol*/*100a)^{a}* | | *0.99* | *1.63* | *1.63* | *2.30* | *3.40* | *4.25* | *5.10* | *0.24* | *1.61* | *0.33* | *1.64* | *0.39* | *1.65* | |

| | | | | | | | | | | | | | | | |
|---|---|---|---|---|---|---|---|---|---|---|---|---|---|---|---|
| ^{a)} Concentration of the reactive thioxanthone-based moiety in the varnish (mmol reactive thioxanthone-based moiety / 100 g varnish) | | | | | | | | | | | | | | | |

### A3. Assessment of the curing performance of the cationic UV-LED radiation curable protective varnishes E1 - E5 and comparative varnishes C1 - C9 using the MEK rub test

The protective coatings obtained as described at item A2 above were stored in the dark for 24 hours. After that period, the deep cure performance of each protective coating, which is indicative of the curing properties of the varnish used for obtaining said protective varnish, was assessed by the following procedure:
- a cotton swab was dipped in methyl ethyl ketone (MEK) 99.5% (Brenntag);
- each protective coating was rubbed 50 times with the cotton swab, on an area of approx. 0.5cm by 5cm, using a gentle pressure of the hand and after30 seconds, the rubbed area was visually assessed. The results of the visual assessment summarized in **Table 2B** were classified as follows:
   "poor": the MEK rub test results in the partial or total removal of the protective varnish, which indicates that the curing of the protective coating is insufficient, and the varnish presents poor curing properties),
   "acceptable": the MEK rub test is visually detectable, there is no removal of the of the protective coating, which indicates that the curing of the protective coating is acceptable, and the varnish presents acceptable curing properties),
   "optimal": the MEK rub test is not visually detectable, which indicates that the curing of the protective coating is optimal, and the varnish presents optimal curing properties. Varnishes with optimal curing properties under the herein described curing conditions are suitable to be used for the industrial production of protective coatings for security documents.

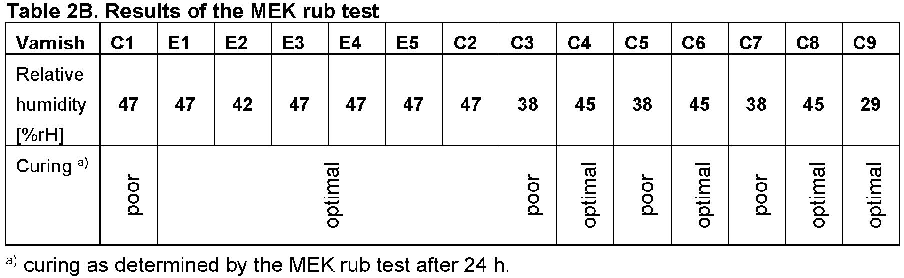

### A4. Evaluation of the fluorescence exhibited by the protective coatings exhibiting optimal curing properties as determined by the MEK rub test

The fluorescence exhibited by the protective coatings obtained from varnishes exhibiting optimal curing properties as determined by the MEK rub test i.e. the protective coatings obtained from the cationic UV-LED radiation curable protective varnishes **E1** - **E5** and comparative varnishes **C2, C4, C6, C8** and **C9** was assessed using the method described hereafter. **Table 2C** presents the fluorescence results.

The residual fluorescence of the protective coatings was assessed using a Fluorolog II (Spex) device at 254 nm and 366 nm, using the following parameters:
Detector: R928/0115/0381
Angle: 30°
Position: front face
Excitation slit: 2 nm (254 nm) and 2 nm (366 nm)
Integration time: 0.1 sec
Covered wavelength: 400-700 nm (increment 1 nm)
Detection slit: 1 nm (254 nm) and 1 nm (366 nm), UV-filter (400nm and below) to avoid detection of excitation light
From the obtained spectrum, the intensity maximum of fluorescence was determined and the obtained value was reported as an absolute value in photons/sec., as shown in **Table 2C.**

The absolute intensity at maximum fluorescence (in photons/sec.) measured for each protective coating obtained from the cationic UV-LED radiation curable protective varnishes **E1 - E5** according to the present invention and the comparative varnishes with optimal curing properties **(C2, C4, C6, C8, C9)** was compared to the absolute intensity at maximum fluorescence of comparison standards (ST1 - ST4). Said comparison standards have been prepared with a cationic varnish for curing under standard mercury lamps, with compounds that are considered by skilled people as exhibiting low intrinsic fluorescence and/or able to generate only a minimal amount of fluorescent degradation products upon curing. The comparison standards (ST1 - ST4) were prepared at the same time as the protective coating for which they serve as comparison standard.

The residual fluorescence of the comparison standards (ST1 - ST4) was measured at the same time as the residual fluorescence of the protective coating for which they serve as comparison standard.

**Table 2C. composition of the standard cationic protective varnish that is UV-Vis curable with Hg lamps (used to produce the comparison standards ST1 - ST4)**

| **Ingredient** | **Commercial name** | [wt-%] |
|---|---|---|
| Cycloaliphatic epoxide | Uvacure^{®} 1500 | 69.45 |
| Oxetane | *Curalite*^{™}Ox | 15.05 |
| Antifoam agent | TEGO^{®} AIREX 900 (Evonik) | 0.30 |
| Surfactant | BYK^{®}-330 | 0.50 |
| Matting agent | ACEMATT^{®} TS 100 | 5.25 |
| Solvent | n-butanol | 3.00 |
| Cationic photoinitiator | Speedcure 992 | 6.45 |

The standard cationic protective varnish described in **Table 2C** was applied to a piece of fiduciary polymer substrate (Guardian^{™} by CCL Secure) using a hand-coater unit with a n°0 bar (RK-print) to form a varnish layer having a size of approximately 5 cm x 10 cm and a thickness of about 4µm. The varnish layer was cured at controlled relative humidity by exposing said varnish layer two times at a speed of 100 m/min to UV-Vis light under a mercury lamp unit (IST Metz GmbH; two lamps: iron-doped mercury lamp + mercury lamp), generating the comparison standards **ST1** - **ST4.**

After storage in the dark for 24 h, the curing of each independent comparison standard **ST1 - ST4** was evaluated using the MEK rub test described at item **A3** above. The comparison standards **ST1 - ST4** showed an optimal curing.

**Table 2D** displays the absolute intensity at maximum fluorescence of the protective coatings obtained from the varnishes **E1 - E5, C2, C4, C6, C8, C9** and the absolute intensity at maximum fluorescence (in photons/sec.) of the corresponding comparison standards **(ST1** - **ST4),** as well as the ratio between the absolute intensity at maximum fluorescence of each of the protective coatings and the absolute intensity at maximum fluorescence of the corresponding comparison standard **ST1 - ST4** *(relative fluorescence value).*

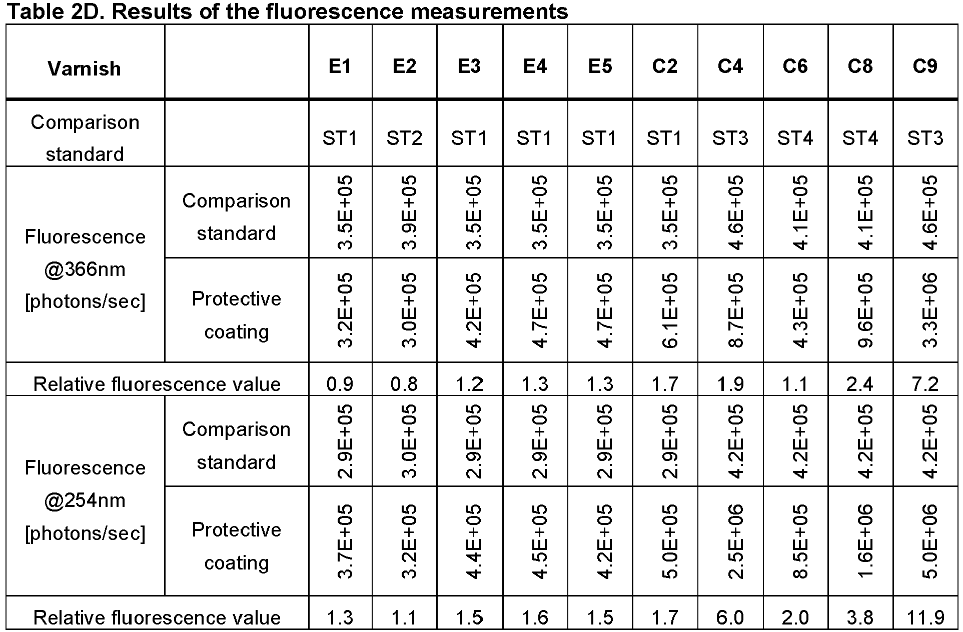

The fluorescence of the protective coatings obtained from the cationic UV-LED radiation curable protective varnishes **E1** - **E5** according to the present invention and comparative varnishes **C2, C4, C6, C8** and **C9** was also visually assessed using a CAMAG UV Cabinet 4 (equipped with two UV tubes at 254 nm and 366 nm, 8 W each). The visual perception was correlated with the measured relative fluorescence value determined as described above. **Table 2E** summarizes the correlations between the visual perception and the measured relative fluorescence value.

**Table 2E**

| Relative fluorescence value at 254/366nm | Visual perception |
|---|---|
| < 1.3 | Low fluorescence, close to comparison standard |
| 1.3 - 1.6 | Acceptable fluorescence |
| >1.6 | Too high fluorescence |

Protective varnishes are usually applied on the whole surface and on both sides of the security document. Hence, protective coatings exhibiting a relative fluorescence higher than 1.6 (compared to the comparison standards **ST1** - **ST4)** tend to make the visual observation and/or machine readability of luminescent security features present in said security document difficult or even impossible.

As shown by the experiments conducted with the protective varnishes **E1-E5** according to the present invention, cationic UV-LED radiation curable protective varnishes comprising a photosensitizer of general formula **(I)** and a concentration of 2-keto-thioxanthone moiety from about 1.3 mmol to about 4.7 mmol per 100g of protective varnish, exhibit both an optimal curing performance and a low to acceptable fluorescence both at 254 nm and 366 nm. Cationic UV-LED radiation curable protective varnishes comprising a photosensitizer of general formula **(I),** but a concentration of 2-keto-thioxanthone moiety lower than about 1.3 mmol per 100g of protective varnish, such as comparative varnish **C1,** show a poor curing performance. Cationic UV-LED radiation curable protective varnishes comprising a photosensitizer of general formula **(I),** but a concentration of 2-keto-thioxanthone moiety higher than 4.7 mmol per 100g of protective varnish, such as comparative varnish **C2,** have a good curing performance, but yield protective coatings exhibiting a too high fluorescence.

As shown by the experiments conducted with the comparative varnishes **C3, C5** and **C7,** varnishes containing a thioxanthone containing photosensitizer other than a photosensitizer of general formula **(I)** as described herein in low amounts suffer from poor curing properties and result in insufficiently cured coatings using curing conditions suitable for industrial coating processes.

As shown by the experiments conducted with the comparative varnishes **C4, C6** and **C8,** cationic UV-LED radiation curable protective varnish comprising a reactive thioxanthone-based moiety containing photosensitizer other than a photosensitizer of general formula **(I),** wherein the concentration of the reactive thioxanthone-based moiety is within the claimed range, have a good curing performance but generate a protective coating exhibiting too high fluorescence, particularly at 254nm.

As shown by the experiments conducted with the comparative varnish **C9,** a cationic UV-LED radiation curable protective varnish comprising an sulfonium photoinitiator instead of a diaryl iodonium photoinitiator and 9, 10-dibutoxyanthracene as photosensitizer have a good curing performance, but yield protective coatings showing extremely high fluorescence.

Cationic UV-LED radiation curable protective varnishes exhibiting a too high fluorescence, particularly a relative fluorescence value higher than about 1.6 as measured hereabove, are not suitable to be applied on security documents, since they render the machine detectability of underlying luminescent security features present on said security documents difficult or even impossible.

## Claims

1. A cationic UV-LED radiation curable protective varnish comprising:
**a)** from 65 wt-% to 90 wt-% of either a cycloaliphatic epoxide, or a mixture of a cycloaliphatic epoxide and one or more cationically curable monomers other than the cycloaliphatic epoxide;
**b)** from 1 wt-% to 10 wt-%, preferably from 2 wt-% to 5 wt-%, more preferably 3 wt-% of **a** diaryl iodonium salt;
**c)** from 0.01 wt-% to 5 wt-% of a non-ionic surfactant; and
**d)** a photosensitizer of general formula (I) 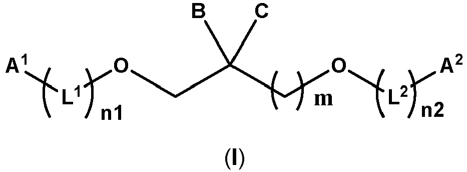 wherein in the general formula (I)
**A¹** and **A²** are independently of each other selected from hydrogen and a moiety of the following structure: 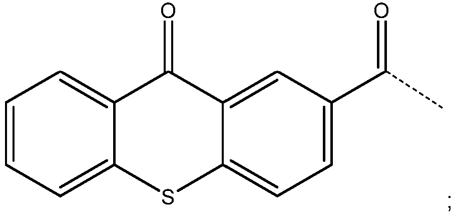
**-L¹-** is selected from 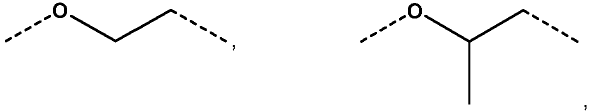 and 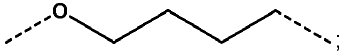
**-L²-** is selected from 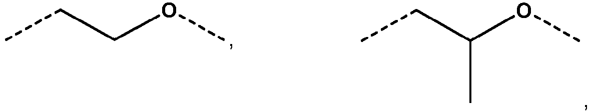 and 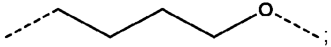
**n1** and **n2** are integers higher than or equal to 0;
and
either
m represents 0;
**B** represent hydrogen;
**C** is selected from hydrogen, 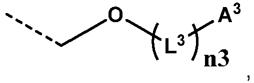 and 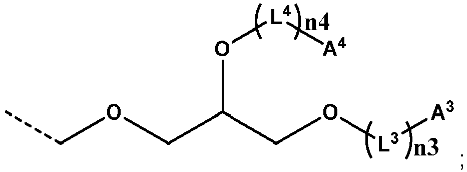
**A³** and **A**⁴ are independently of each other selected from hydrogen and a moiety of the following structure: 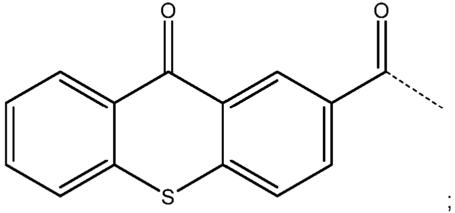
**-L³-** and **-L⁴-** are independently of each other selected from 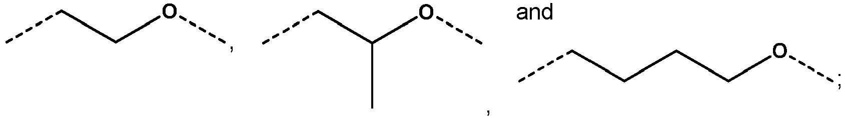
and **n3,** and **n4** are integers higher than or equal to 0, wherein
the sum n1+n2 is comprised between 2 and 8;
the sum n1+n2+n3 is comprised between 3 and 12; and
the sum n1+n2+n3+n4 is comprised between 4 and 16;
or
**m** represents 1;
**B** is selected from ethyl, and 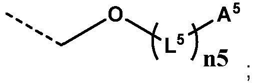
C is selected from 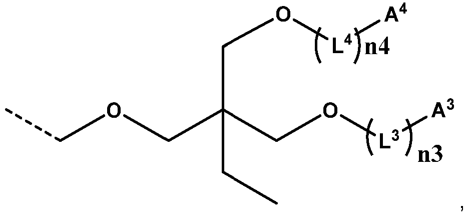 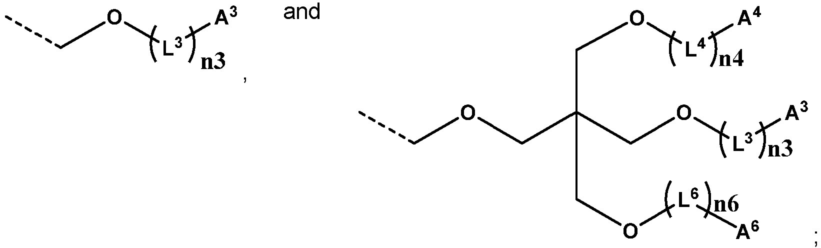
**A³**, **A⁴**, **A⁵** and **A⁶** are independently of each other selected from hydrogen and a moiety of the following structure: 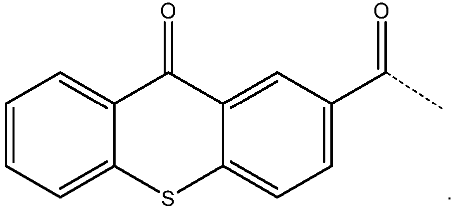
**-L³-, -L⁴**-, -**L⁵**- and -**L⁶**- are independently of each other selected from 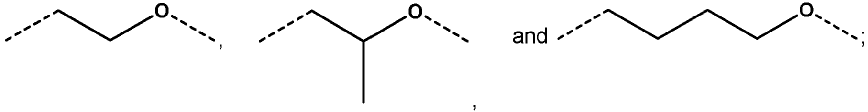
and **n3, n4, n5** and **n6** are integers higher than or equal to 0, wherein
the sum n1+n2+n3 is comprised between 3 and 12;
the sum n1+n2+n3+n4 is comprised between 4 and 16;
the sum n1+n2+n3+n4+n6 is comprised between 5 and 15;
the sum n1+n2+n3+n5 is comprised between 4 and 16;
the sum n1+n2+n3+n4+n5 is comprised between 5 and 15;
the sum n1+n2+n3+n4+n5+n6 is comprised between 6 and 18;
wherein
the cationic UV-LED radiation curable protective varnish comprises a concentration of the moiety 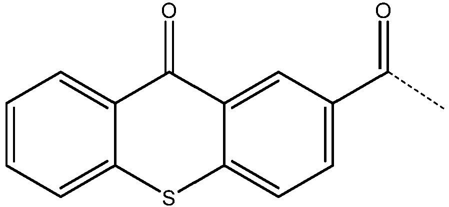
present in the photosensitizer of general formula **(I)** from 1.3 mmol to 4.7 mmol of said moiety per 100 g of cationic UV-LED radiation curable protective varnish;
the weight percents being based on the total weight of the cationic UV-LED radiation curable protective varnish.

2. The cationic UV-LED radiation curable protective varnish according to claim 1, wherein **-L¹-** represents 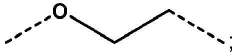 and **-L²- -L³-, -L⁴**-, -**L⁵-** and -**L⁶**- represent

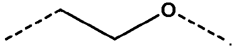

3. The cationic UV-LED radiation curable protective varnish according to claim 1, wherein **-L¹-** represents 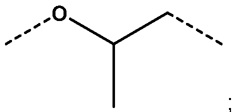 and -L²-, -L³-, -L⁴-, -L⁵- and -L⁶- represent

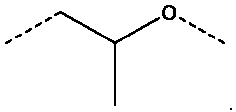

4. The cationic UV-LED radiation curable protective varnish according to any one of the claims 1 - 3, wherein the photosensitizer is of general formula (I-a) 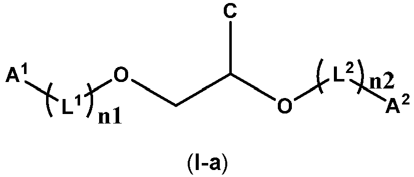 wherein
A¹, **A²**, **C, n1** and **n2** have the meanings defined in claim 1, and
**-L¹**- and **-L²**- have the meanings as defined in any one of claims 1 - 3.

5. The cationic UV-LED radiation curable protective varnish according to any one of the claims 1 - 3, wherein the photosensitizer is of general formula **(I-b)** 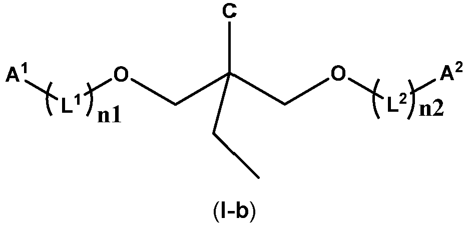 wherein
**A¹**, **A²**, **C, n1** and **n2** have the meanings defined in claim 1, and
-**L¹**- and -**L²**- have the meanings as defined in any one of claims 1 - 3.

6. The cationic UV-LED radiation curable protective varnish according to any one of the claims 1 - 3, wherein the photosensitizer is of general formula (I-c) 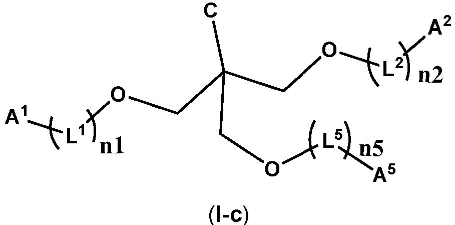 wherein
**A¹**, **A²**, **A⁵**, **C, n1, n2** and **n5** have the meanings defined in claim 1, and
-**L¹**-, -**L²**- and -**L⁵**- have the meanings as defined in any one of claims 1 - 3.

7. The cationic UV-LED radiation curable protective varnish according to any one of claims 1 - 6, wherein
**C** represents 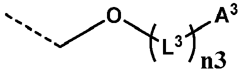 wherein **A** ³ and **n3** have the meanings defined in claim 1, and **-L³-** has the meaning as defined in any one of claims 1 - 3.

8. The cationic UV-LED radiation curable protective varnish according to any one of claims 1 - 7, wherein the concentration of the moiety 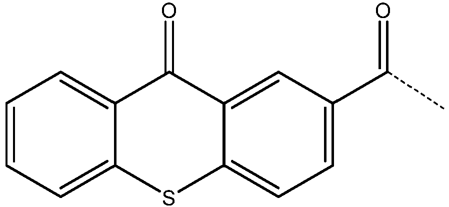 in the cationic UV-LED curable protective varnish is from 1.6 mmol to 2.9 mmol per 100 g cationic UV-LED curable protective varnish.

9. The cationic UV-LED radiation curable protective varnish according to any one of claims 1 - 8, wherein the diaryl iodonium salt is of general formula **(II)** 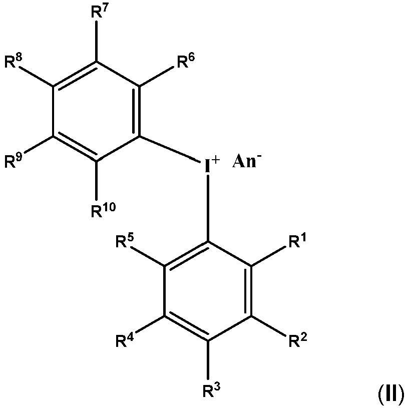 wherein
**R¹ - R¹⁰** are independently of each other selected from hydrogen, a C₁-C₁₈-alkyl group, and
C₁-C₁₂-alkyloxy group; and
**An⁻** is an anion selected from BF₄⁻, B(C₆F₅)₄⁻, PF₆⁻, AsF₆⁻, SbF₆⁻, CF₃SO₃⁻, (CH₃C₆H₄)SO₃⁻, (C₄F₉)SO₃⁻, (CF₃)CO₂⁻, (C₄F₉)CO₂⁻, and (CF₃SO₂)₃C⁻.

10. The cationic UV-LED radiation curable protective varnish according to any one of the claims 1 - 9, wherein the one or more cationically curable monomers other than the cycloaliphatic epoxide are selected from the group consisting of: vinyl ethers, propenyl ethers, cyclic ethers other than a cycloaliphatic epoxide, lactones, cyclic thioethers, vinyl thioethers, propenyl thioethers, hydroxyl-containing compounds, and mixtures thereof.

11. The cationic UV-LED radiation curable protective varnish according to any one of the claims 1 - 10, wherein the varnish is selected from a flexography printing varnish, an inkjet printing varnish, and a screen-printing varnish.

12. A process for coating a security document comprising a substrate and one or more security features applied on or inserted into a portion of the substrate, wherein said process comprises the following steps:
**i)** applying, preferably by a printing method selected from inkjet printing, flexography printing, and screen printing, the cationic UV-LED radiation curable protective varnish according to any one of the claims 1 - 11 on a surface of the substrate and/or a surface of the one or more security features of the security document so as to form a varnish layer; and
**ii)** curing the varnish layer by exposure to UV light emitted by a UV-LED source so as to form a protective coating covering the surface of the substrate and/or the surface of the one or more security features of the security document.

13. A security document comprising a substrate, one or more security features applied on or inserted into a portion of the substrate, and a protective coating covering a surface of the substrate and/or a surface of the one or more security features of the security document, wherein the protective coating is obtained by the process according to claim 12.

14. The security document according to claim 13, wherein the security document is selected from banknotes, deeds, tickets, checks, vouchers, fiscal stamps, tax labels, agreements, and identity documents, such as passports, identity cards, visas, bank cards, credit cards, transaction cards, access documents, and entrance tickets.

## Patentansprüche

1. Durch kationische UV-LED-Strahlung härtbarer Schutzlack, der aufweist:
**a)** von 65 Gew.-% bis 90 Gew.-% entweder eines cycloaliphatischen Epoxids oder einer Mischung aus einem cycloaliphatischen Epoxid und einem oder mehreren kationisch härtbaren Monomeren, die sich vom cycloaliphatischen Epoxid unterscheiden;
**b)** von 1 Gew.-% bis 10 Gew.-%, vorzugsweise von 2 Gew.-% bis 5 Gew.-%, besonders bevorzugt 3 Gew.-% eines Diaryl-Iodoniumsalzes;
**c)** von 0,01 Gew.-% bis 5 Gew.-% eines nichtionischen Tensids; und
**d)** einen Photosensibilisator der allgemeinen Formel (I) 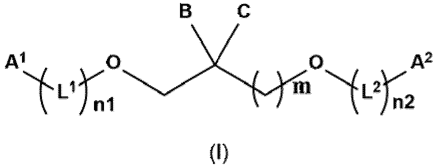 wobei in der allgemeinen Formel (I)
**A¹** und **A²** unabhängig voneinander aus Wasserstoff und einem Rest der folgenden Struktur 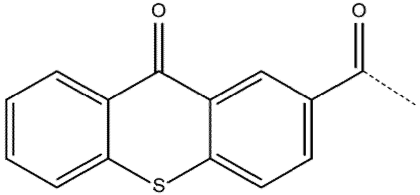 ausgewählt sind;
**-L¹-** aus 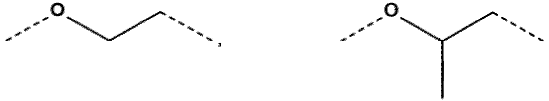 und 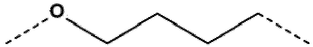 ausgewählt ist;
**-L²-** aus 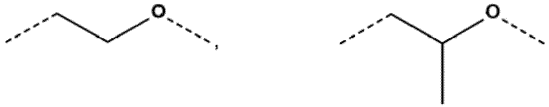 und 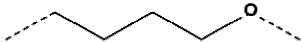 ausgewählt ist;
**n1** und **n2** ganze Zahlen größer oder gleich 0 sind;
und
entweder
**m** für 0 steht;
**B** für Wasserstoff steht;
**C** aus Wasserstoff, 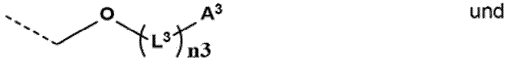 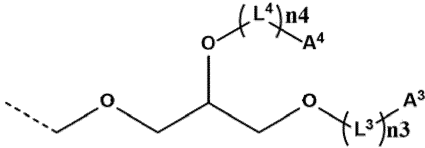 ausgewählt ist;
**A³** und **A⁴** unabhängig voneinander aus Wasserstoff und einem Rest der folgenden Struktur 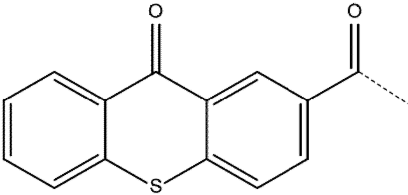 ausgewählt sind;
**-L³-** und **-L⁴-** unabhängig voneinander aus 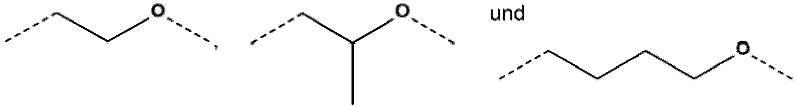 ausgewählt sind;
und **n3** und **n4** ganze Zahlen größer oder gleich 0 sind, wobei
die Summe n1+n2 einen Wert zwischen 2 und 8 aufweist;
die Summe n1+n2+n3 einen Wert zwischen 3 und 12 aufweist; und
die Summe n1+n2+n3+n4 einen Wert zwischen 4 und 16 aufweist;
oder
**m** für 1 steht;
**B** aus Ethyl und 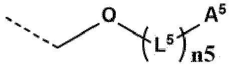 ausgewählt ist;
**C** aus 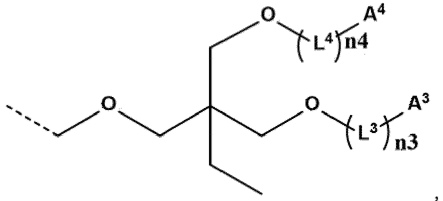 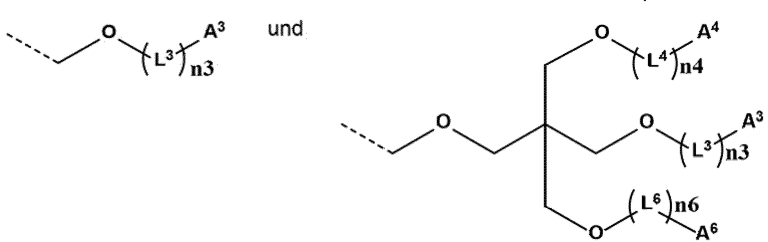 ausgewählt ist;
**A³**, **A⁴**, **A⁵** und **A⁶** unabhängig voneinander aus Wasserstoff und einem Rest der folgenden Struktur 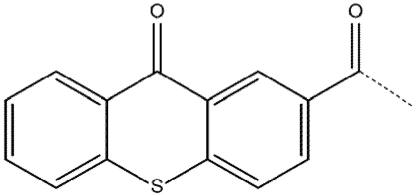 ausgewählt sind;
-L³-, -L⁴-, -L⁵- und -L⁶- unabhängig voneinander aus 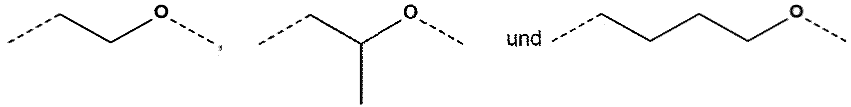 ausgewählt sind;
und **n3, n4, n5** und **n6** ganze Zahlen größer oder gleich 0 sind, wobei
die Summe n1+n2+n3 einen Wert zwischen 3 und 12 aufweist;
die Summe n1+n2+n3+n4 einen Wert zwischen 4 und 16 aufweist;
die Summe n1+n2+n3+n4+n6 einen Wert zwischen 5 und 15 aufweist;
die Summe n1+n2+n3+n5 einen Wert zwischen 4 und 16 aufweist;
die Summe n1+n2+n3+n4+n5 einen Wert zwischen 5 und 15 aufweist;
die Summe n1+n2+n3+n4+n5+n6 einen Wert zwischen 6 und 18 aufweist;
wobei
der durch kationische UV-LED-Strahlung härtbare Schutzlack eine Konzentration des im Photosensibilisator der allgemeinen Formel **(I)** enthaltenen Rests 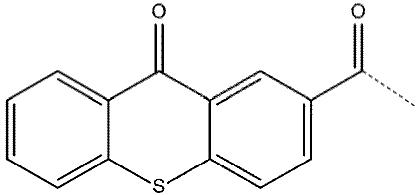
von 1,3 mmol bis 4,7 mmol dieses Rests pro 100 g des durch kationische UV-LED-Strahlung härtbaren Schutzlacks aufweist;
die Gewichtsprozente auf dem Gesamtgewicht des durch kationische UV-LED-Strahlung härtbaren Schutzlacks basieren.

2. Durch kationische UV-LED-Strahlung härtbarer Schutzlack nach Anspruch 1, wobei **-L¹-** für 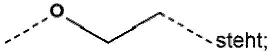 und **-L²-, -L³-, -L⁴-, -L⁵-** und **-L⁶-** für

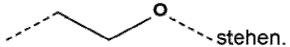

3. Durch kationische UV-LED-Strahlung härtbarer Schutzlack nach Anspruch 1, wobei **-L¹-** für 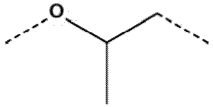 steht;
und **-L²-, -L³-, -L⁴-, -L⁵-** und **-L⁶-** für 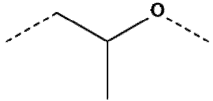 stehen.

4. Durch kationische UV-LED-Strahlung härtbarer Schutzlack nach einem der Ansprüche 1 bis 3, wobei der Photosensibilisator die allgemeine Formel **(I-a)** aufweist: 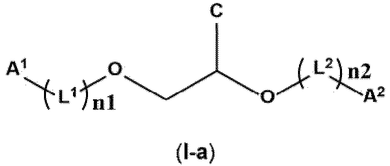 wobei
**A¹, A²**, **C, n1** und **n2** die in Anspruch 1 definierten Bedeutungen haben, und
**-L¹-** und **-L²-** die in einem der Ansprüche 1 bis 3 definierten Bedeutungen haben.

5. Durch kationische UV-LED-Strahlung härtbarer Schutzlack nach einem der Ansprüche 1 bis 3, wobei der Photosensibilisator die allgemeine Formel **(I-b)** aufweist: 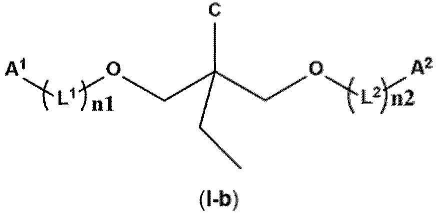 wobei
**A¹, A², C, n1** und **n2** die in Anspruch 1 definierten Bedeutungen haben, und
**-L¹-** und **-L²-** die in einem der Ansprüche 1 bis 3 definierten Bedeutungen haben.

6. Durch kationische UV-LED-Strahlung härtbarer Schutzlack nach einem der Ansprüche 1 bis 3, wobei der Photosensibilisator die allgemeine Formel (I-c) aufweist: 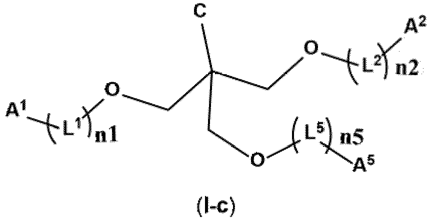 wobei
**A¹, A², A⁵, C, n1, n2** und **n5** die in Anspruch 1 definierten Bedeutungen haben, und
**-L¹-, -L²-** und **-L⁵-** die in einem der Ansprüche 1 bis 3 definierten Bedeutungen haben.

7. Durch kationische UV-LED-Strahlung härtbarer Schutzlack nach einem der Ansprüche 1 bis 6, wobei
C für 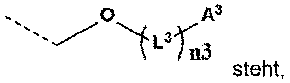 wobei A³ und **n3** die in Anspruch 1 definierten Bedeutungen haben und -L³- die in einem der Ansprüche 1 bis 3 definierte Bedeutung hat.

8. Durch kationische UV-LED-Strahlung härtbarer Schutzlack nach einem der Ansprüche 1 bis 7, wobei die Konzentration des Rests 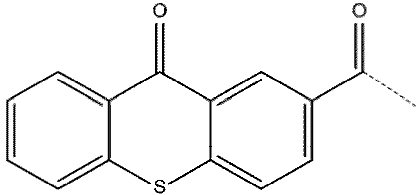 in dem kationischen durch UV-LED-Strahlung härtbaren Schutzlack 1,6 mmol bis 2,9 mmol pro 100 g des kationischen durch UV-LED-Strahlung härtbaren Schutzlacks beträgt.

9. Durch kationische UV-LED-Strahlung härtbarer Schutzlack nach einem der Ansprüche 1 bis 8, wobei das Diaryl-Iodoniumsalz der allgemeinen Formel (II) entspricht 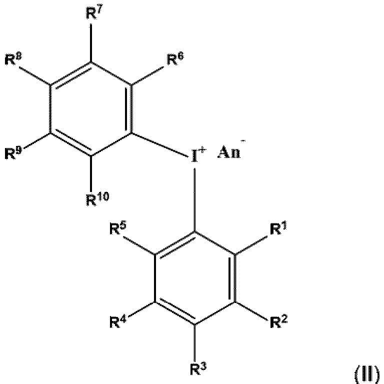 wobei
**R¹** - **R¹⁰** unabhängig voneinander ausgewählt sind aus Wasserstoff, einer C₁-C₁₈-Alkylgruppe, und
C₁-C₁₂-Alkyloxygruppe; und
**An⁻** ein Anion ist, ausgewählt aus BF₄⁻, B(C₆F₅)₄⁻, PF₆⁻, AsF₆⁻, SbF₆⁻, CF₃SO₃⁻, (CH₃C₆H₄)SO₃⁻, (C₄F₉)SO₃⁻, (CF₃)CO₂⁻, (C₄F₉)CO₂⁻ und (CF₃SO₂)₃C⁻.

10. Durch kationische UV-LED-Strahlung härtbarer Schutzlack nach einem der Ansprüche 1 bis 9, wobei das eine oder die mehreren kationisch härtbaren Monomere außer dem cycloaliphatischen Epoxid aus der Gruppe ausgewählt sind, die besteht aus: Vinylethern, Propenylethern, cyclischen Ethern außer einem cycloaliphatischen Epoxid, Lactonen, cyclischen Thioethern, Vinylthioethem, Propenylthioethern, hydroxylhaltigen Verbindungen und Mischungen davon.

11. Durch kationische UV-LED-Strahlung härtbarer Schutzlack nach einem der Ansprüche 1 bis 10, wobei der Lack aus einem Flexodrucklack, einem Tintenstrahldrucklack und einem Siebdrucklack ausgewählt ist.

12. Verfahren zum Beschichten eines Sicherheitsdokuments, das ein Substrat und ein oder mehrere Sicherheitsmerkmale aufweist, die auf einen Teil des Substrats aufgebracht oder in diesen eingebracht sind, wobei das Verfahren die folgenden Schritte aufweist:
**i)** Auftragen, vorzugsweise durch ein Druckverfahren, ausgewählt aus Tintenstrahldruck, Flexodruck und Siebdruck, des durch kationische UV-LED-Strahlung härtbaren Schutzlacks nach einem der Ansprüche 1 bis 11 auf eine Oberfläche des Substrats und/oder eine Oberfläche des einen oder der mehreren Sicherheitsmerkmale des Sicherheitsdokuments, um eine Lackschicht zu bilden; und
**ii)** Aushärten der Lackschicht durch Aussetzung gegenüber UV-Licht, das von einer UV-LED-Quelle emittiert wird, um eine Schutzbeschichtung zu bilden, die die Oberfläche des Substrats und/oder die Oberfläche des einen oder der mehreren Sicherheitsmerkmale des Sicherheitsdokuments bedeckt.

13. Sicherheitsdokument, das ein Substrat, ein oder mehrere Sicherheitsmerkmale, die auf einen Teil des Substrats aufgebracht oder in diesen eingebracht sind, und eine Schutzbeschichtung aufweist, die eine Oberfläche des Substrats und/oder eine Oberfläche des einen oder der mehreren Sicherheitsmerkmale des Sicherheitsdokuments bedeckt, wobei die Schutzbeschichtung durch das Verfahren nach Anspruch 12 erhalten wird.

14. Sicherheitsdokument nach Anspruch 13, wobei das Sicherheitsdokument aus Banknoten, Urkunden, Fahrkarten, Schecks, Gutscheinen, Steuermarken, Steueretiketten, Verträgen und Ausweisdokumenten wie Reisepässen, Personalausweisen, Visa, Bankkarten, Kreditkarten, Transaktionskarten, Zugangsdokumenten und Eintrittskarten ausgewählt ist.

## Revendications

1. Vernis protecteur durcissable par rayonnement DEL UV par voie cationique comprenant :
**a)** de 65 % en poids à 90 % en poids soit d'un époxyde cycloaliphatique, soit d'un mélange d'un époxyde cycloaliphatique et d'un ou plusieurs monomères durcissables par voie cationique autres que l'époxyde cycloaliphatique ;
**b)** de 1 % en poids à 10 % en poids, de préférence de 2 % en poids à 5 % en poids, de manière davantage préférée 3 % en poids d'un sel de diaryl iodonium ;
**c)** de 0,01 % en poids à 5 % en poids d'un tensioactif non ionique ; et
**d)** un photosensibilisateur de formule générale **(I)** 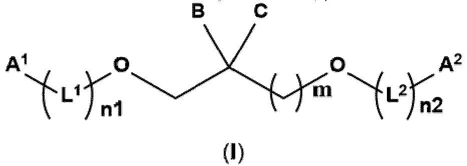 dans lequel dans la formule générale **(I)**
**A¹** et **A²** sont indépendamment l'un de l'autre sélectionnés parmi un hydrogène et un groupement de la structure suivante : 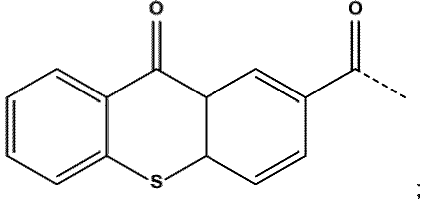
**-L¹-** est sélectionné parmi 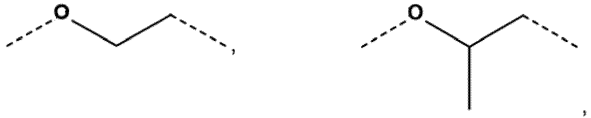 et 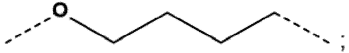
**-L²-** est sélectionné parmi 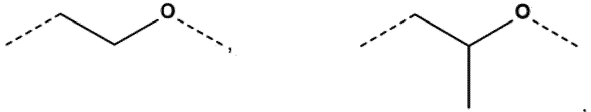 et 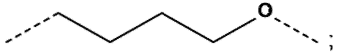
**n1** et **n2** sont des nombres entiers supérieurs ou égaux à 0 ;
et
soit
**m** représente 0 ;
**B** représentent un hydrogène ;
**C** est sélectionné parmi un hydrogène, 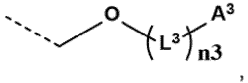
et 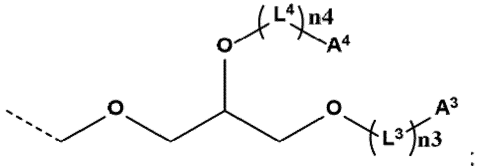
**A³** et **A⁴** sont indépendamment l'un de l'autre sélectionnés parmi un hydrogène et un aroupement de la structure suivante : 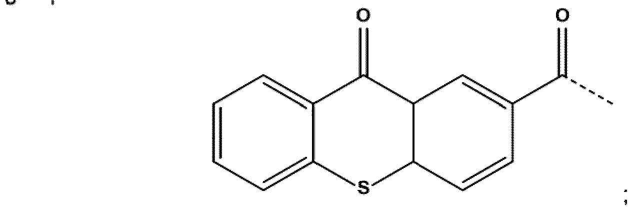
-L³- et -L⁴- sont indépendamment l'un de l'autre sélectionnés parmi 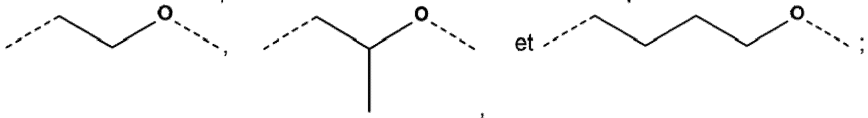
et **n3** et **n4** sont des nombres entiers supérieurs ou égaux à 0, dans lequel
la somme n1 +n2 est comprise entre 2 et 8 ;
la somme n1 +n2+n3 est comprise entre 3 et 12 ; et
la somme n1+n2+n3+n4 est comprise entre 4 et 16 ;
ou
**m** représente 1 ;
**B** est sélectionné parmi un éthyle, et 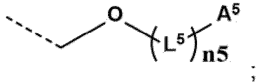
**C** est sélectionné parmi 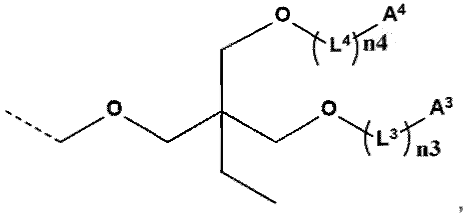 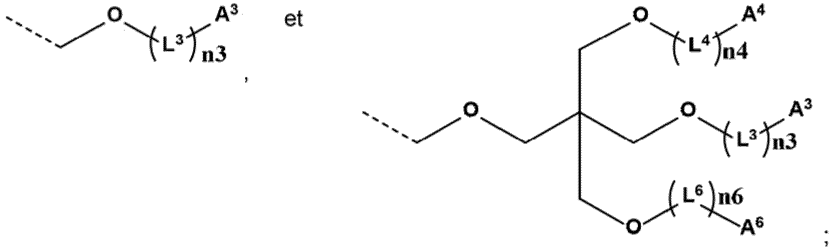
**A³**, **A⁴**, **A⁵** et **A⁶** sont indépendamment l'un de l'autre sélectionnés parmi un hydrogène et un groupement de la structure suivante : 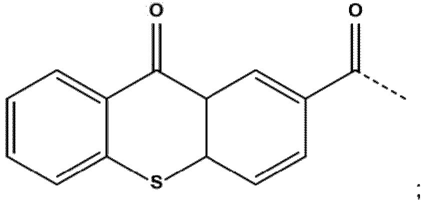
-L³-, -L⁴-, -L⁵- et -L⁶- sont indépendamment les uns des autres sélectionnés parmi 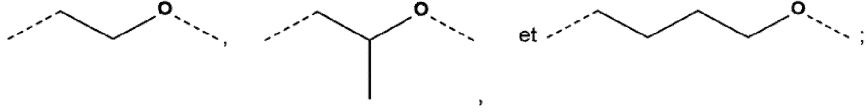
et **n3, n4, n5** et **ne** sont ces nomeres entiers superieurs ou egaux a 0, dans lequel
la somme n1+n2+n3 est comprise entre 3 et 12 ;
la somme n1+n2+n3+n4 est comprise entre 4 et 16 ;
la somme n1+n2+n3+n4+n6 est comprise entre 5 et 15 ;
la somme n1 +n2+n3+n5 est comprise entre 4 et 16 ;
la somme n1 +n2+n3+n4+n5 est comprise entre 5 et 15 ;
la somme n1+n2+n3+n4+n5+n6 est comprise entre 6 et 18 ;
dans lequel
le vernis protecteur durcissable par rayonnement DEL UV par voie cationique comprend une concentration du groupement 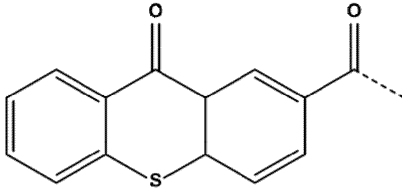 présent dans le photosensibilisateur de formule générale **(I)** de 1,3 mmol à 4,7 mmol dudit groupement par 100 g de vernis protecteur durcissable par rayonnement DEL UV par voie cationique ;
les pourcentages en poids étant basés sur le poids total du vernis protecteur durcissable par rayonnement DEL UV par voie cationique.

2. Vernis protecteur durcissable par rayonnement DEL UV par voie cationique selon la revendication 1, dans lequel
- **L¹-** représente 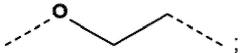 et **-L²-, -L³-, -L⁴-, -L⁵-** et **-L⁶-** représentent

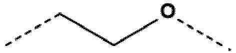

3. Vernis protecteur durcissable par rayonnement DEL UV par voie cationique selon la revendication 1, dans lequel
- **L¹-** représente 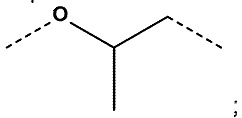 et **-L²-, -L³-, -L⁴-, -L⁵-** et **-L⁶-** représentent

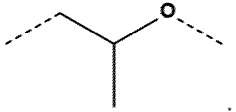

4. Vernis protecteur durcissable par rayonnement DEL UV par voie cationique selon l'une quelconque des revendications 1 à 3, dans lequel le photosensibilisateur est de formule générale **(I-a)** 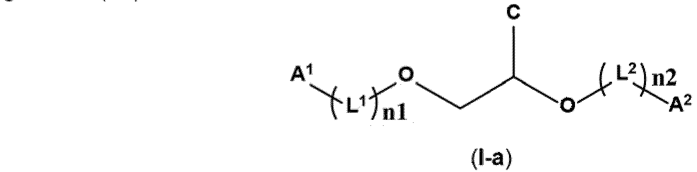 dans lequel
**A¹, A², C, n1** et **n2** ont les significations définies dans la revendication 1, et
**-L¹-** et **-L²-** ont les significations telles que définies dans l'une quelconque des revendications 1 à 3.

5. Vernis protecteur durcissable par rayonnement DEL UV par voie cationique selon l'une quelconque des revendications 1 à 3, dans lequel le photosensibilisateur est de formule générale **(I-b)** 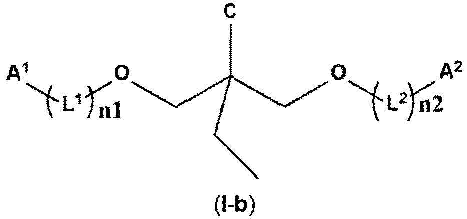 dans lequel
**A¹, A²**, **C, n1** et **n2** ont les significations définies dans la revendication 1, et
**-L¹-** et **-L²-** ont les significations telles que définies dans l'une quelconque des revendications 1 à 3.

6. Vernis protecteur durcissable par rayonnement DEL UV par voie cationique selon l'une quelconque des revendications 1 à 3, dans lequel le photosensibilisateur est de formule générale **(I-c)** 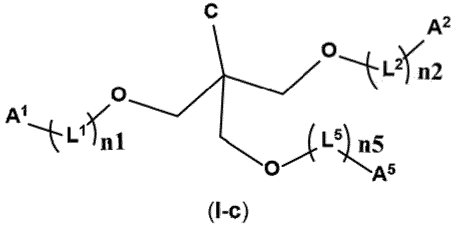 dans lequel
**A¹, A², A⁵, C, n1, n2** et **n5** ont les significations définies dans la revendication 1, et
**-L¹-, -L²-** et **-L⁵-** ont les significations telles que définies dans l'une quelconque des revendications 1 à 3.

7. Vernis protecteur durcissable par rayonnement DEL UV par voie cationique selon l'une quelconque des revendications 1 à 6, dans lequel
C représente 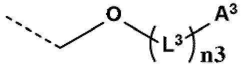
dans lequel **A³** et **n3** ont les significations définies dans la revendication 1, et **-L³-** a la signification telle que définie dans l'une quelconque des revendications 1 à 3.

8. Vernis protecteur durcissable par rayonnement DEL UV par voie cationique selon l'une quelconque des revendications 1 à 7, dans lequel la concentration du groupement 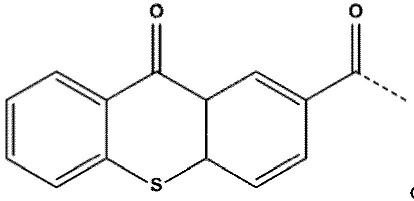 dans le vernis protecteur durcissable par DEL UV par voie cationique est de 1,6 mmol à 2,9 mmol par 100 g de vernis protecteur durcissable par DEL UV par voie cationique.

9. Vernis protecteur durcissable par rayonnement DEL UV par voie cationique selon l'une quelconque des revendications 1 à 8, dans lequel le sel de diaryl iodonium est de formule générale **(II)** 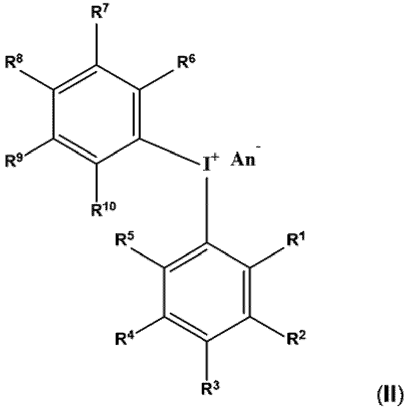 dans lequel
**R¹** à **R¹⁰** sont indépendamment les uns des autres sélectionnés parmi un hydrogène, un groupe C₁-C₁₈-alkyle, et un groupe C₁-C₁₂-alkyloxy ; et
**An⁻** est un anion sélectionné parmi le BF₄⁻, le B(C₆F₅)₄⁻, le PF₆⁻, l'AsF₆⁻, le SbF₆⁻, le CF₃SO₃⁻, le (CH₃C₆H₄)SO₃⁻, le (C₄F₉)SO₃⁻, le (CF₃)CO₂⁻, le (C₄F₉)CO₂⁻ et le (CF₃SO₂)₃C⁻.

10. Vernis protecteur durcissable par rayonnement DEL UV par voie cationique selon l'une quelconque des revendications 1 à 9, dans lequel les un ou plusieurs monomères durcissables par voie cationique autres que l'époxyde cycloaliphatique sont sélectionnés dans le groupe constitué de : éthers vinyliques, éthers propényliques, éthers cycliques autres qu'un époxyde cycloaliphatique, lactones, thioéthers cycliques, thioéthers vinyliques, thioéthers propényliques, composés contenant des hydroxyles, et mélanges de ceux-ci.

11. Vernis protecteur durcissable par rayonnement DEL UV par voie cationique selon l'une quelconque des revendications 1 à 10, dans lequel le vernis est un vernis pour impression flexographique, un vernis pour impression par jet d'encre, et un vernis pour sérigraphie.

12. Procédé de revêtement d'un document de sécurité comprenant un substrat et une ou plusieurs caractéristiques de sécurité appliquées sur ou insérées dans une portion du substrat, dans lequel ledit procédé comprend les étapes suivantes :
**i)** application, de préférence par un procédé d'impression sélectionné parmi une impression par jet d'encre, une impression flexographique et une sérigraphie, du vernis protecteur durcissable par rayonnement DEL UV par voie cationique selon l'une quelconque des revendications 1 à 11 sur une surface du substrat et/ou une surface des une ou plusieurs caractéristiques de sécurité du document de sécurité de façon à former une couche de vernis ; et
**ii)** durcissement de la couche de vernis par exposition à une lumière UV émise par une source de DEL UV de façon à former un revêtement protecteur recouvrant la surface du substrat et/ou la surface des une ou plusieurs caractéristiques de sécurité du document de sécurité.

13. Document de sécurité comprenant un substrat, une ou plusieurs caractéristiques de sécurité appliquées sur ou insérées dans une portion du substrat, et un revêtement protecteur recouvrant la surface du substrat et/ou la surface des une ou plusieurs caractéristiques de sécurité du document de sécurité, dans lequel le revêtement protecteur est obtenu par le procédé selon la revendication 12.

14. Document de sécurité selon la revendication 13, dans lequel le document de sécurité est sélectionné parmi les billets de banque, les actes translatifs, les tickets, les chèques, les documents commerciaux, les timbres fiscaux, les étiquettes fiscales, les conventions, et les documents d'identité, tels que les passeports, les cartes d'identité, les visas, les cartes bancaires, les cartes de crédit, les cartes de transaction, les documents d'accès et les tickets d'entrée.
